# EUROPEAN PATENT APPLICATION

(11) **EP 4 567 669 A1**
(43) Date of publication of application: **11.06.2025**
(21) Application number: 23849902.4
(22) Date of filing: 20.07.2023
(51) Int. Cl.: G06N 3/045

(54) **INFORMATION PROCESSING DEVICE, INFORMATION PROCESSING METHOD, AND INFORMATION PROCESSING SYSTEM**

(30) Priority: 04.08.2022 JP 2022125012; 24.10.2022 JP 2022170177
(71) Applicant: Sony Semiconductor Solutions Corporation, Atsugi-shi, Kanagawa 243-0014 (JP)
(72) Inventor: YAMAKAWA, Kenji, Atsugi-shi, Kanagawa 243-0014 (JP); KAWASAKI, Ryohei, Atsugi-shi, Kanagawa 243-0014 (JP); EKI, Ryoji, Atsugi-shi, Kanagawa 243-0014 (JP); YANAGISAWA, Eita, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/026530
(87) International publication number: WO 2024/029347

(57) **Abstract**

An information processing device according to the present technology includes: a subsequent network acquisition processing unit that receives, from an external device, an intermediate feature map obtained in a predetermined intermediate layer of an artificial intelligence model when input data is given to the artificial intelligence model, which has a neural network and receives detection data from a sensor device as the input data, and selects one of subsequent networks from among a plurality of candidate subsequent networks based on the intermediate feature map, the subsequent networks being networks subsequent to the predetermined intermediate layer in the artificial intelligence model, or generates one of the subsequent networks based on a trained network serving as a base and the intermediate feature map; and a transmission processing unit that performs processing of transmitting configuration data of the subsequent network selected or generated by the subsequent network acquisition unit to the outside.

## Description

### [Technical Field]

The present technology relates to an information processing device, a method thereof, and an information processing system, and particularly relates to a technology for adapting an artificial intelligence model, which has a neural network and uses detection data obtained by a sensor device as input data, to a use environmental condition of the sensor device.

### [Background Art]

Solution businesses using an imaging device (hereinafter referred to as an "AI camera") that performs AI processing, which is processing using an artificial intelligence (AI) model, on a captured image is conceivable. For example, there may be a business or the like that provides a system in which one or a plurality of AI cameras are arranged in a store, a recognition result regarding attributes (for example, gender, age group, and the like) and a behavior pattern of a customer is obtained by, for example, image recognition processing, and the recognition result is presented to a user via the Internet or the like.

Since the AI processing is performed on the AI camera side (edge side), the processing can be distributed and the amount of communication data can be reduced as compared with a system in which a server device side (cloud side) performs AI processing based on a captured image acquired from each camera.

At this time, it is possible to consider a service in which the server device performs relearning for the AI model included in the AI camera. In such a relearning service, it is assumed to perform relearning for adaptation in response to a use environmental condition of the AI camera, such as a difference in an area of use such as an environment in which the AI camera is placed, for example, either placement in a store in a country where races of customers are limited such as Japan or placement in a store in a country where races of customers are diverse such as the United States.

Note that an example of the conventional art includes PTL 1 below. PTL1 below discloses a configuration in which an AI model having a deep neural network (DNN) is divided into a first DNN processing unit and a second DNN processing unit, and the second DNN processing unit at a subsequent performs inference processing (for example, object recognition processing) using a feature map obtained by the first DNN processing unit at a preceding stage as input data.

### [Citation List]

### [Patent Literature]

[PTL 1]
JP 2020-47191A

### [Summary]

### [Technical Problem]

Here, in the relearning service described above, it is conceivable to adopt a method of relearning the entire AI model.

However, the number of times of learning required for relearning the entire AI model tends to increase, and as a result, it takes a lot of time to adapt the AI model in the AI camera (edge side) to the use environmental condition of the AI camera. In addition, an increase in the number of times of necessary learning means an increase in the number of pieces of input data for learning to be prepared. In a case where it is assumed that a user of the AI model as a relearning target uploads the input data for learning for relearning to the cloud side, the increase in the number of pieces of input data for learning leads to an increase in the amount of data to be transmitted to the cloud side by the user, resulting in an increase in the amount of communication data required to adapt the AI model to the use environmental condition of the AI camera.

Furthermore, in order to implement the relearning for adapting the AI model to the use environmental condition of the AI camera, it is conceivable to transmit an actually captured image by the AI camera to the cloud side, but transmitting the captured image itself may cause leakage of personal information, which is not desirable.

With the foregoing in view, it is an object of the present technology to shorten a time required for adapting an artificial intelligence model on an edge side to a use environmental condition of a sensor device, reduce an amount of communication data, and reduce a possibility of leakage of personal information.

### [Solution to Problem]

A first information processing device according to the present technology includes: a subsequent network acquisition processing unit that receives, from an external device, an intermediate feature map obtained in a predetermined intermediate layer of an artificial intelligence model when input data is given to the artificial intelligence model, which has a neural network and receives detection data from a sensor device as the input data, and selects one of subsequent networks from among a plurality of candidate subsequent networks based on the intermediate feature map, the subsequent networks being networks subsequent to the predetermined intermediate layer in the artificial intelligence model, or generates one of the subsequent networks based on a trained network serving as a base and the intermediate feature map; and a transmission processing unit that performs processing of transmitting configuration data of the subsequent network selected or generated by the subsequent network acquisition unit to the outside.

According to the above configuration, when the artificial intelligence model on an edge side is adapted to a use environmental condition of the sensor device, it is sufficient to create selection candidates only for the subsequent network instead of the entire network of the artificial intelligence model. Alternatively, it is sufficient to generate the corresponding subsequent network from the trained network serving as the base by, for example, distillation or the like. At this time, the number of times of learning required to generate the candidate subsequent networks can be made smaller than the number of times of learning required for relearning of the entire network including a preceding network. In addition, the number of times of learning required to generate the corresponding subsequent network from the trained network serving as the base can also be made smaller than the number of times of learning required for relearning of the entire network. Since the required number of times of learning can be reduced, a time required to generate a subsequent network suitable for the use environmental condition of the sensor device can be shortened. In addition, since the required number of times of learning can be reduced, the number of pieces of input data for learning required to generate the subsequent network suitable for the use environmental condition of the sensor device can be reduced. In addition, according to the above configuration, it is sufficient to acquire the intermediate feature map from the edge side in order to acquire one subsequent network suitable for the use environmental condition of the sensor device. Since the intermediate feature map is data obtained by processing the input data in the intermediate layer, it is difficult to identify personal information as it is.

In addition, a first information processing method according to the present technology is an information processing method that causes an information processing device to perform: subsequent network acquisition processing of receiving, from an external device, an intermediate feature map obtained in a predetermined intermediate layer of an artificial intelligence model when input data is given to the artificial intelligence model, which has a neural network and receives detection data from a sensor device as the input data, and selecting one of subsequent networks from among a plurality of candidate subsequent networks based on the intermediate feature map, the subsequent networks being networks subsequent to the predetermined intermediate layer in the artificial intelligence model, or generating one of the subsequent networks based on a trained network serving as a base and the intermediate feature map; and transmission processing of transmitting configuration data of the subsequent network selected or generated in the subsequent network acquisition to the outside.

With the first information processing method as well, it is possible to obtain the same operations as those of the first information processing device according to the present technology described above.

A second information processing device according to the present technology includes: a transmission processing unit that performs processing of transmitting, to the outside, an intermediate feature map obtained in a predetermined intermediate layer of an artificial intelligence model when input data is given to the artificial intelligence model, which has a neural network and receives detection data from a sensor device as the input data; a reception processing unit that performs processing of receiving configuration data of any subsequent network that is either one of subsequent networks selected by an external device from among a plurality of candidate subsequent networks based on the intermediate feature map transmitted by the transmission processing unit, the subsequent networks being networks subsequent to the predetermined intermediate layer in the artificial intelligence model, or one of the subsequent networks generated by the external device based on a trained network serving as a base and the intermediate feature map transmitted by the transmission processing unit; and an inference processing unit that performs inference processing using the subsequent network achieved by the configuration data received by the reception processing unit.

According to the above configuration, as an edge-side information processing device that performs inference processing based on detection data of a sensor device, there is provided the information processing device capable of adopting any one of a method of selecting one of the subsequent networks from among the plurality of candidate subsequent networks based on the intermediate feature map and a method of generating one of the subsequent networks based on the trained network serving as the base and the intermediate feature map as a method of obtaining the subsequent network suitable for a use environmental condition of the sensor device by the external device.

In addition, a second information processing method according to the present technology is an information processing method that causes an information processing device to perform: transmission processing of transmitting, to the outside, an intermediate feature map obtained in a predetermined intermediate layer of an artificial intelligence model when input data is given to the artificial intelligence model, which has a neural network and receives detection data from a sensor device as the input data; reception processing of receiving configuration data of any subsequent network that is either one of subsequent networks selected by an external device from among a plurality of candidate subsequent networks based on the intermediate feature map transmitted in the transmission processing, the subsequent networks being networks subsequent to the predetermined intermediate layer in the artificial intelligence model, or one of the subsequent networks generated by the external device based on a trained network serving as a base and the intermediate feature map transmitted in the transmission processing; and inference processing of performing inference processing using the subsequent network achieved by the configuration data received in the reception processing.

With the second information processing method as well, it is possible to obtain the same operations as those of the second information processing device according to the present technology described above.

An information processing system according to the present technology includes: a first transmission processing unit that performs processing of transmitting, to the outside, an intermediate feature map obtained in a predetermined intermediate layer of an artificial intelligence model when input data is given to the artificial intelligence model which has a neural network and receives detection data from a sensor device as the input data; a subsequent network acquisition unit that is provided in an external device outside a device including the first transmission processing unit, and selects one of subsequent networks from among a plurality of candidate subsequent networks based on the intermediate feature map transmitted by the first transmission processing unit, the subsequent networks being networks subsequent to the predetermined intermediate layer in the artificial intelligence model, or generates one of the subsequent networks based on a trained network serving as a base and the intermediate feature map transmitted by the first transmission processing unit; a second transmission processing unit that is provided in the external device outside the device including the first transmission processing unit and performs processing of transmitting configuration data of the subsequent network selected or generated by the subsequent network acquisition unit to the outside; a reception processing unit that is provided in the device including the first transmission processing unit and performs processing of receiving the configuration data; and an inference processing unit that is provided in the device including the first transmission processing unit and performs inference processing using the subsequent network achieved by the configuration data received by the reception processing unit.

With the information processing system as well, it is possible to obtain the same operations as those of the first and second information processing devices according to the present technology described above.

### [Brief Description of Drawings]

[Fig. 1]

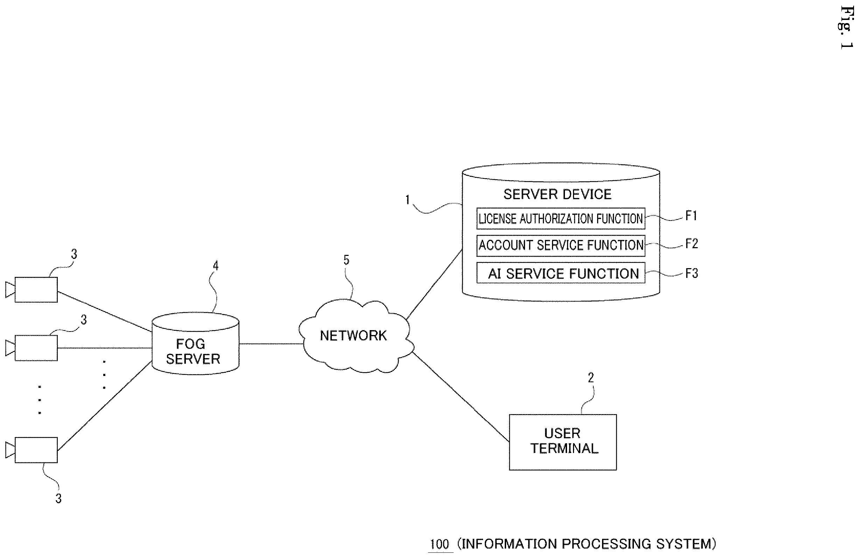

   Fig. 1 is a block diagram illustrating an example of a schematic configuration of an information processing system as an embodiment.
[Fig. 2]

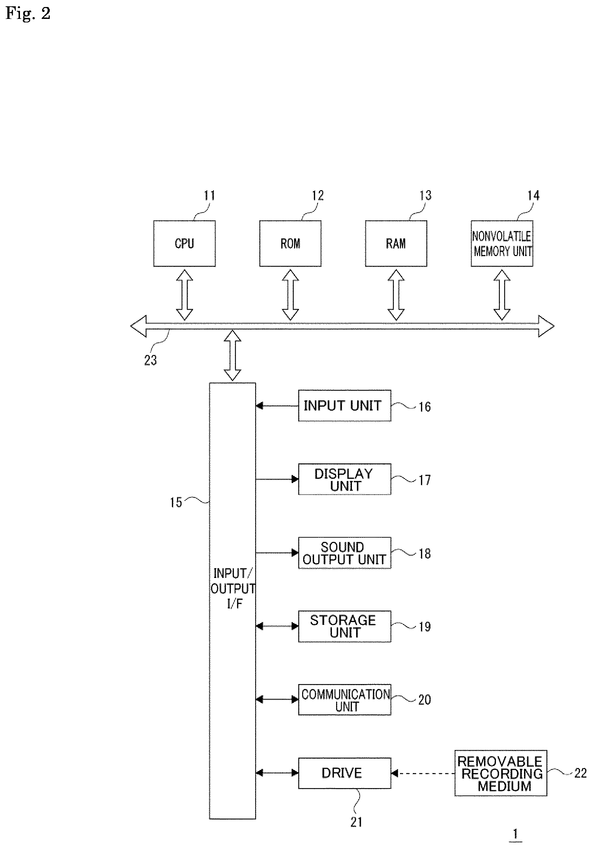

   Fig. 2 is a block diagram illustrating an example of a hardware configuration of an information processing device included in the information processing system as an embodiment.
[Fig. 3]

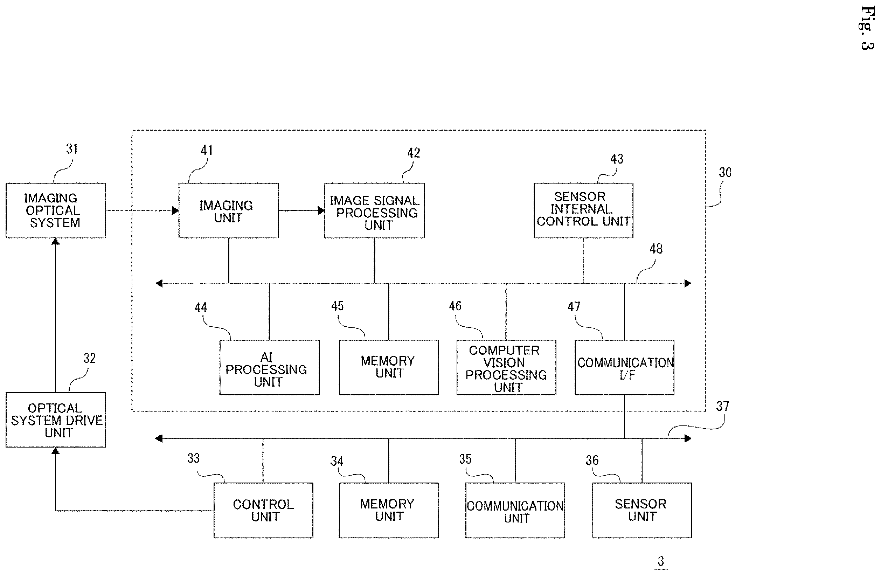

   Fig. 3 is a block diagram illustrating an example of a configuration of a camera including a sensor device as the embodiment.
[Fig. 4]

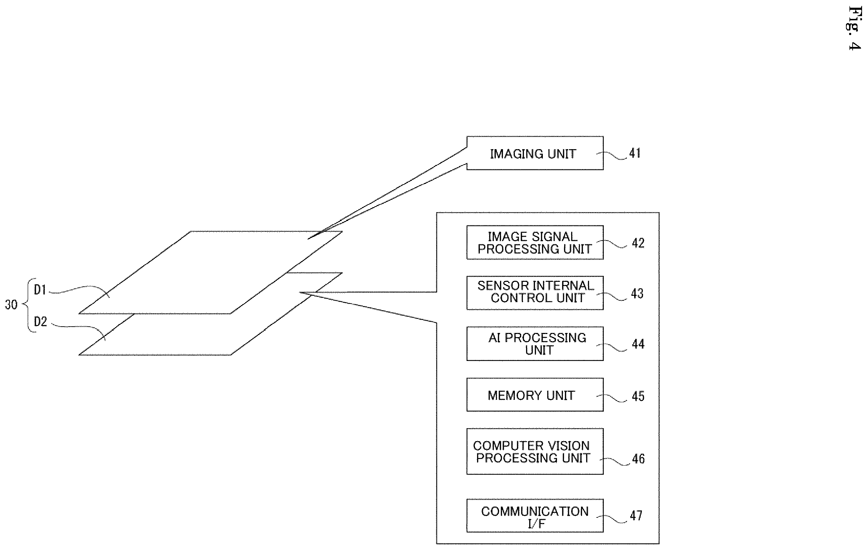

   Fig. 4 is a diagram of an example of a structure of the sensor device as the embodiment.
[Fig. 5]

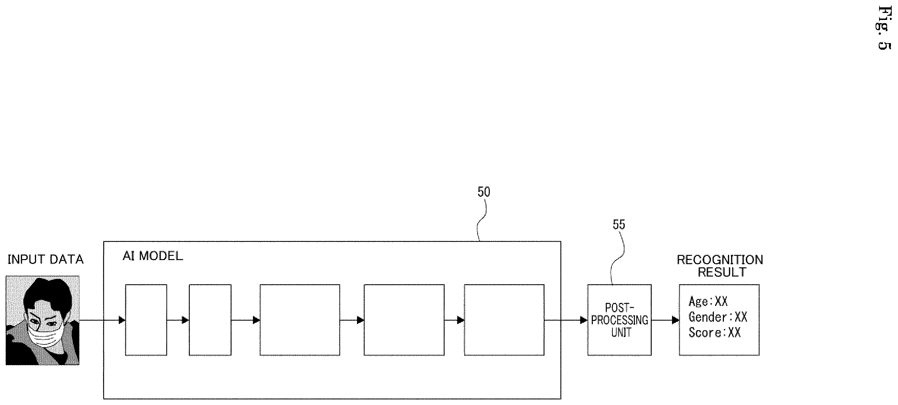

   Fig. 5 is an explanatory diagram of an overview of an AI model in the embodiment.
[Fig. 6]

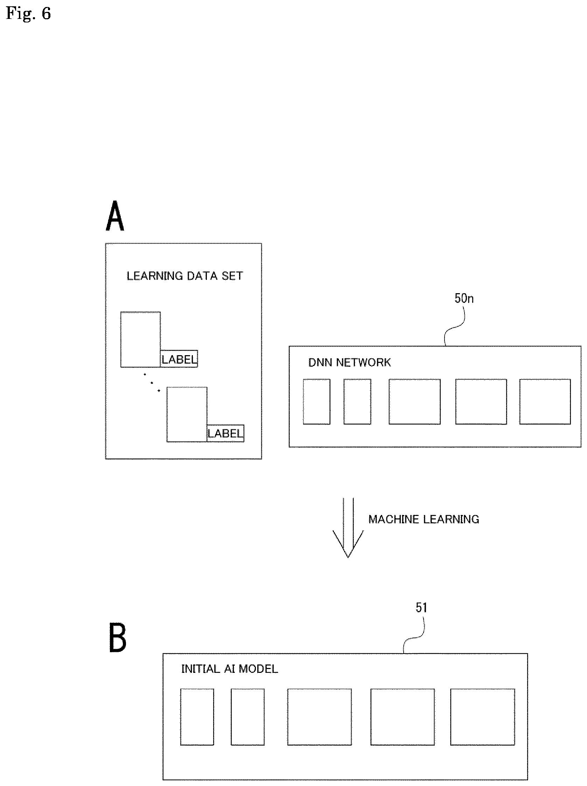

   Fig. 6 is an explanatory diagram of an initial AI model in the embodiment.
[Fig. 7]

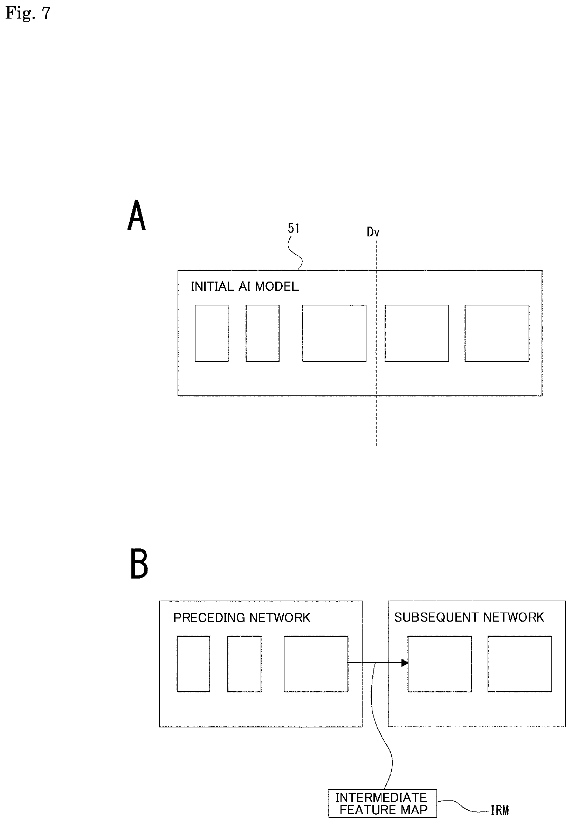

   Fig. 7 is an explanatory diagram of division of the initial AI model and a preceding network and a subsequent network.
[Fig. 8]

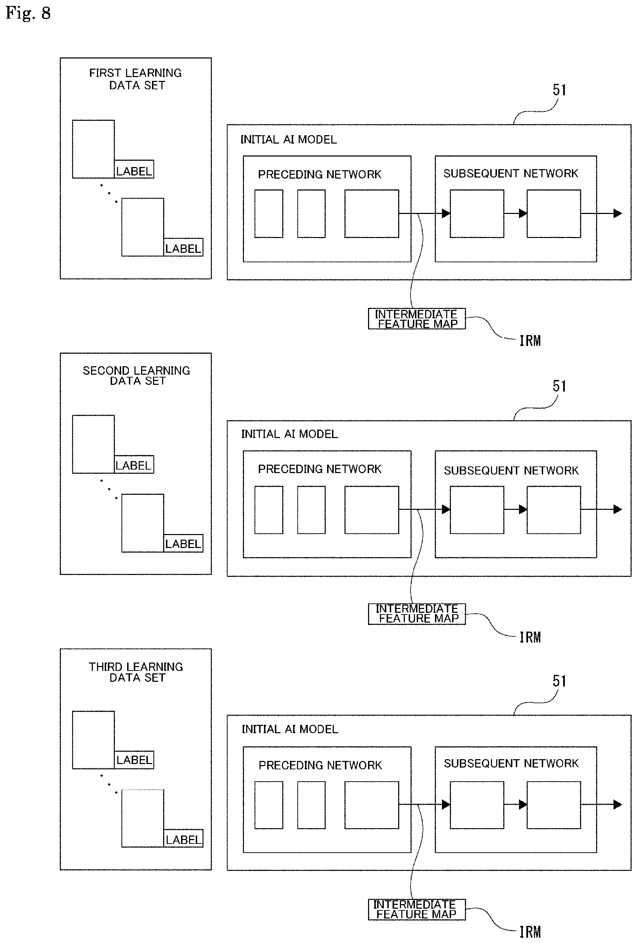

   Fig. 8 is an explanatory diagram of an example of a method of generating a candidate subsequent network.
[Fig. 9]

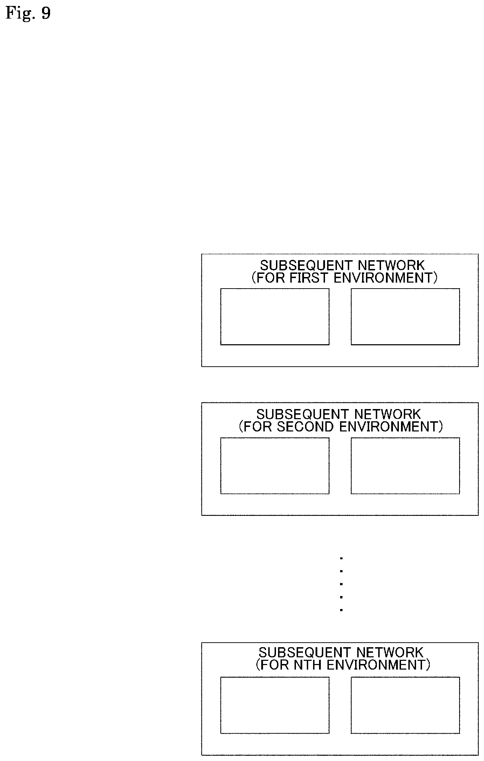

   Fig. 9 is an explanatory diagram of a plurality of candidate subsequent networks generated by relearning.
[Fig. 10]

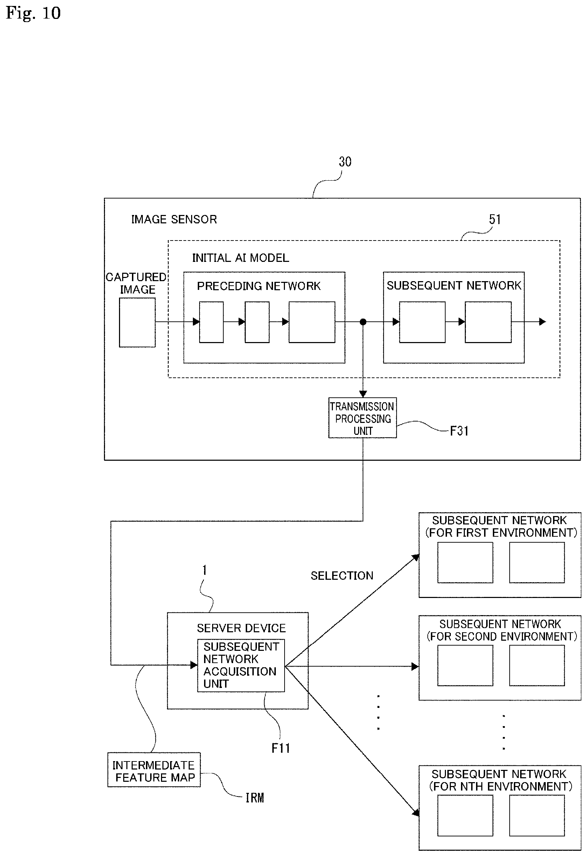

   Fig. 10 is a diagram for describing respective functions of a server device and an image sensor related to selection of a subsequent network.
[Fig. 11]

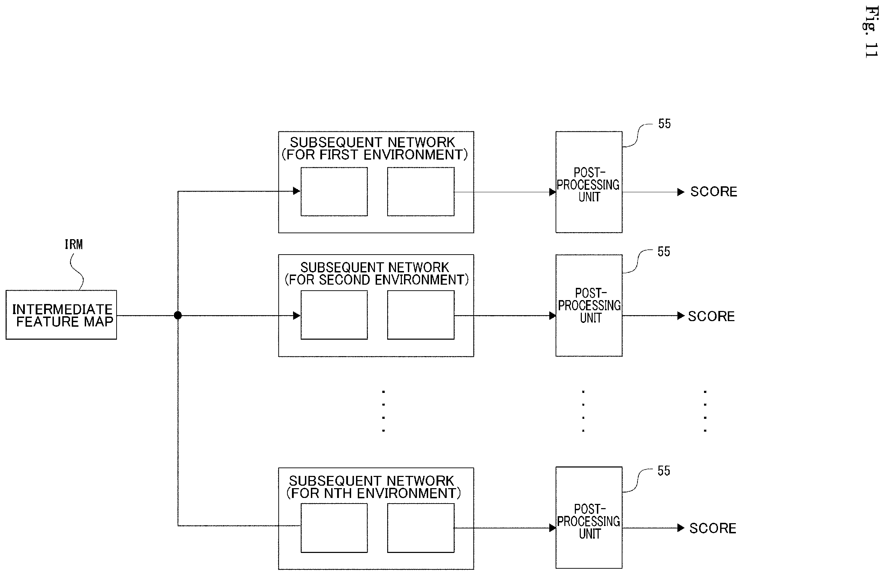

   Fig. 11 is an explanatory diagram of an example of a method of selecting one subsequent network based on an intermediate feature map.
[Fig. 12]

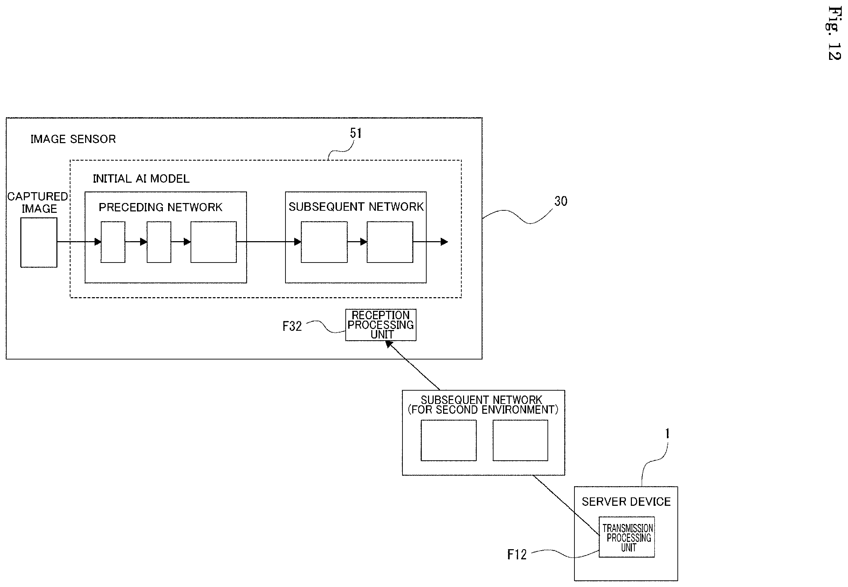

   Fig. 12 is an explanatory diagram of functions of the server device and the image sensor related to deployment of a selected subsequent network.
[Fig. 13]

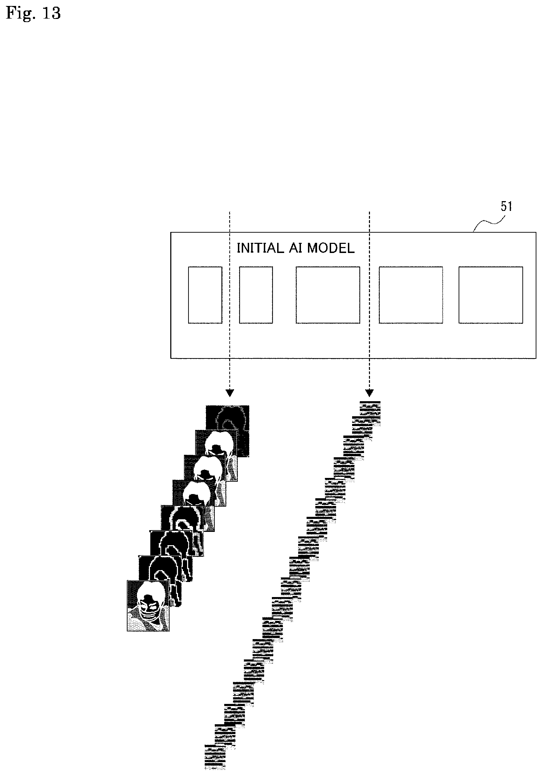

   Fig. 13 is a diagram illustrating visualized images of intermediate feature maps obtained at two different division positions for the initial AI model.
[Fig. 14]

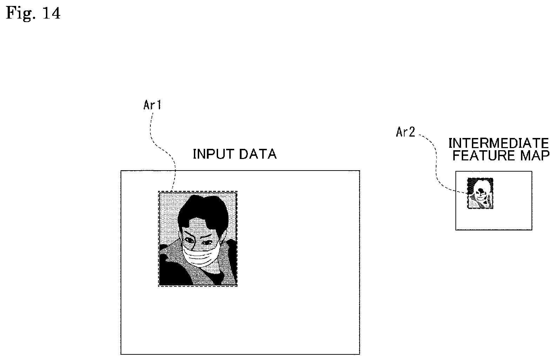

   Fig. 14 is an explanatory diagram of an image area related to personal information in the intermediate feature map.
[Fig. 15]

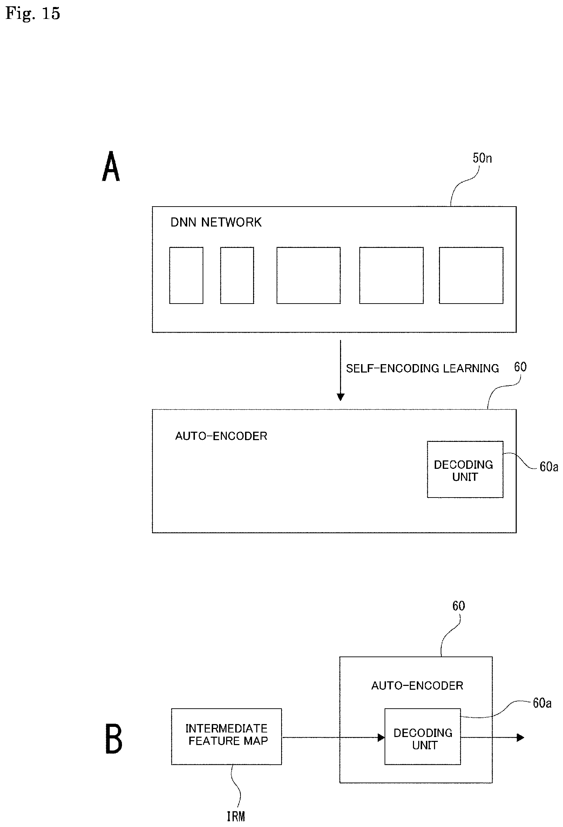

   Fig. 15 is an explanatory diagram of another method of setting a division position.
[Fig. 16]

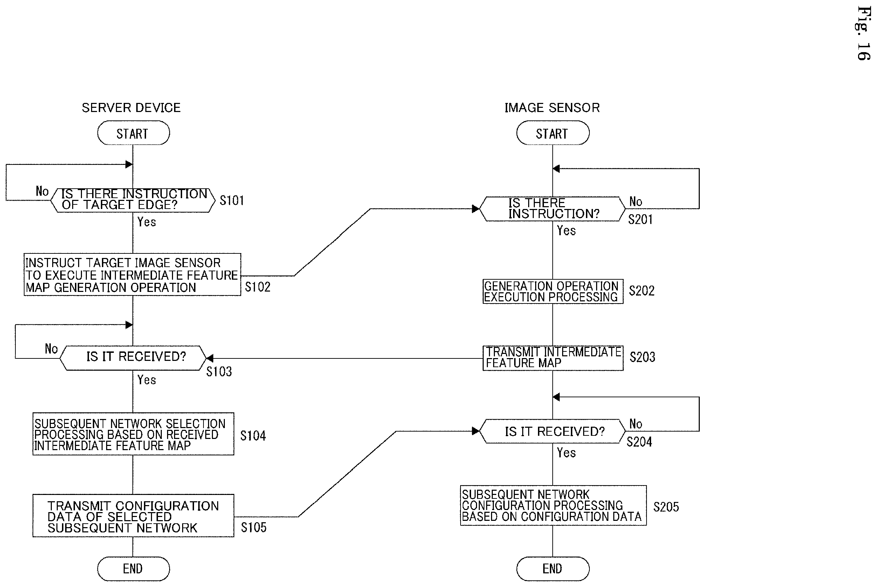

   Fig. 16 is a flowchart illustrating an example of processing procedure for implementing an adaptation method as an embodiment.
[Fig. 17]

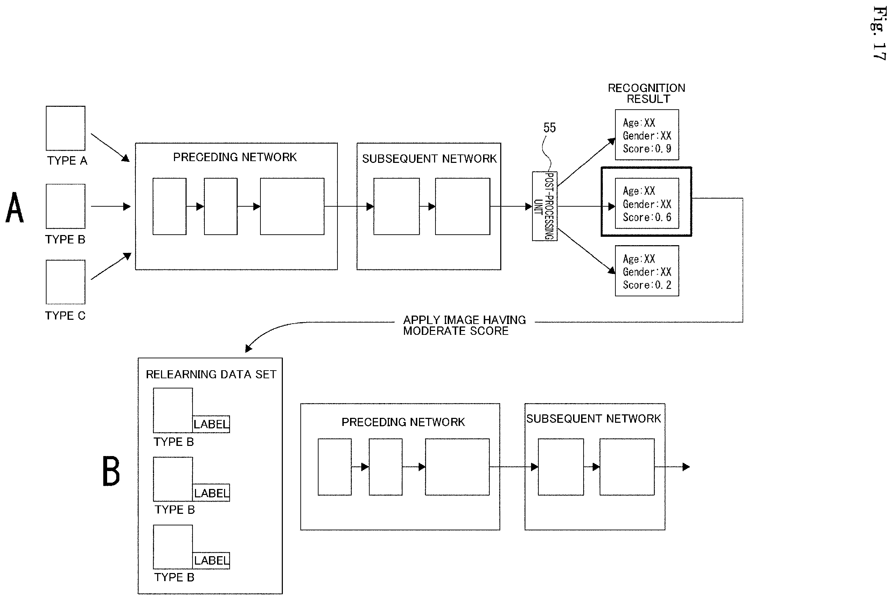

   Fig. 17 is an explanatory diagram of a subsequent network generation method to which active learning is applied.
[Fig. 18]

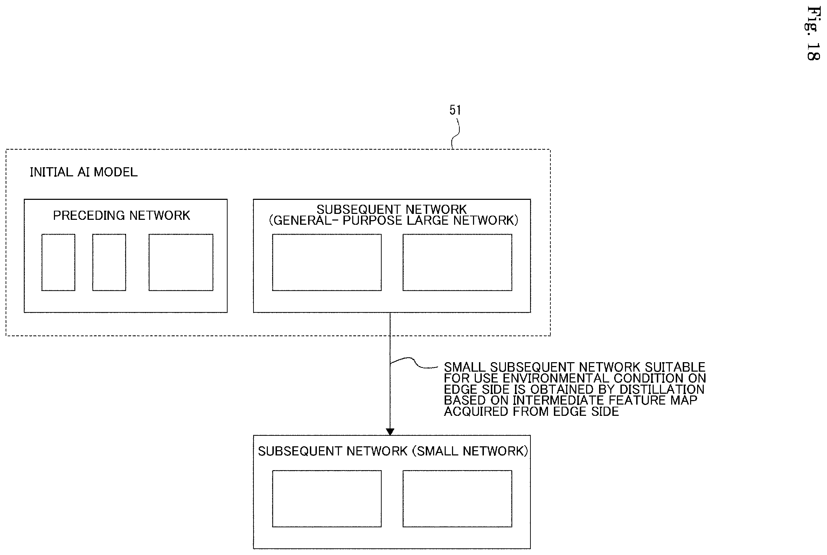

   Fig. 18 is an explanatory diagram of an example of a method of generating a small subsequent network by knowledge distillation.
[Fig. 19]

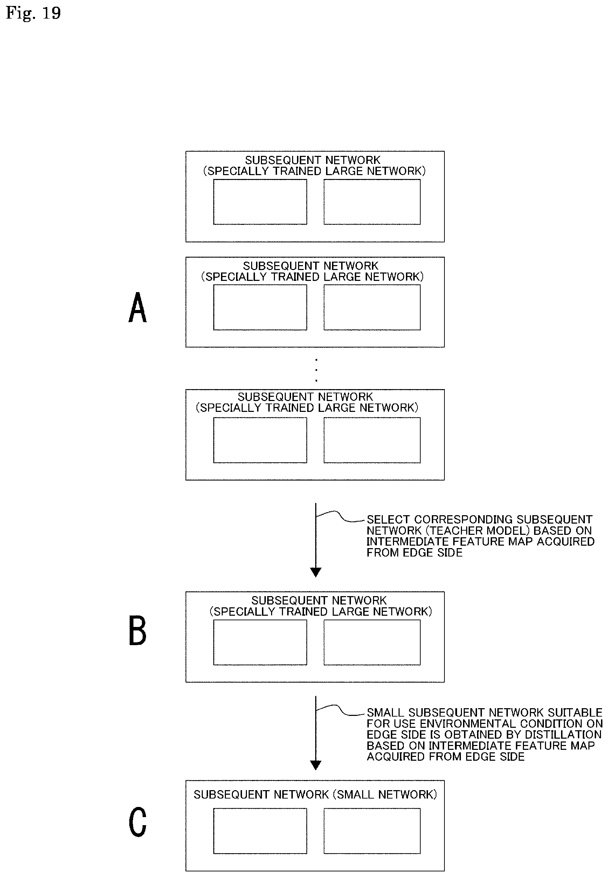

   Fig. 19 is an explanatory diagram of another example of the method of generating a small subsequent network by knowledge distillation.
[Fig. 20]

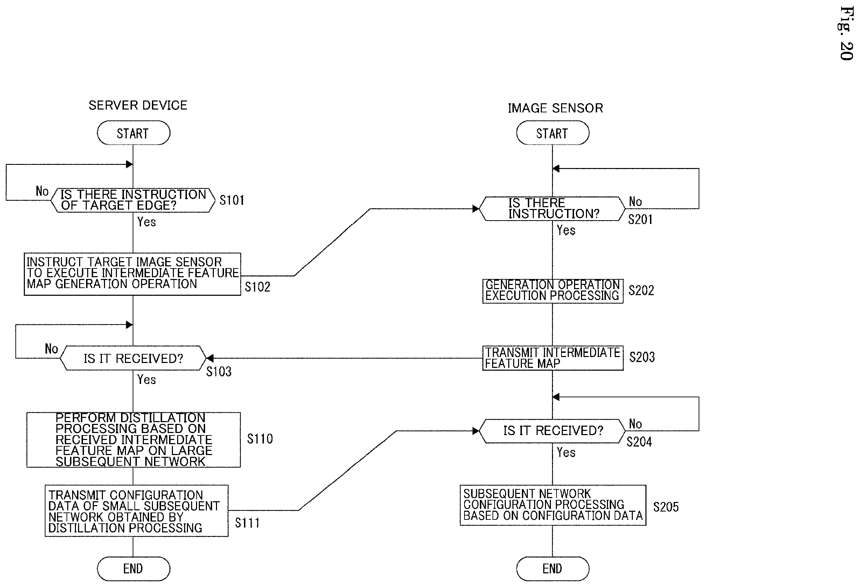

   Fig. 20 is a flowchart illustrating an example of processing procedure for implementing an adaptation method corresponding to a case in which a small subsequent network is generated by knowledge distillation.
[Fig. 21]

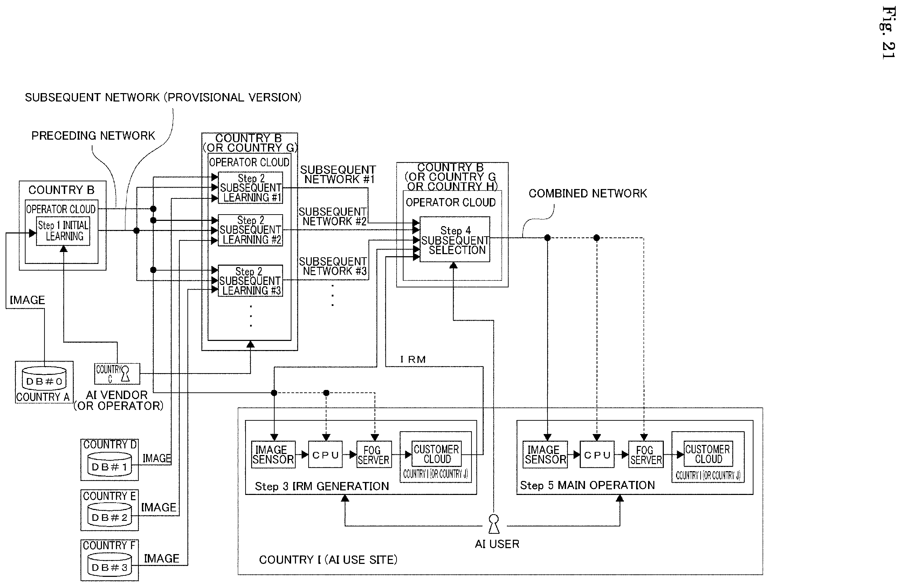

   Fig. 21 is a diagram for describing an operation example of the information processing system as an embodiment.
[Fig. 22]

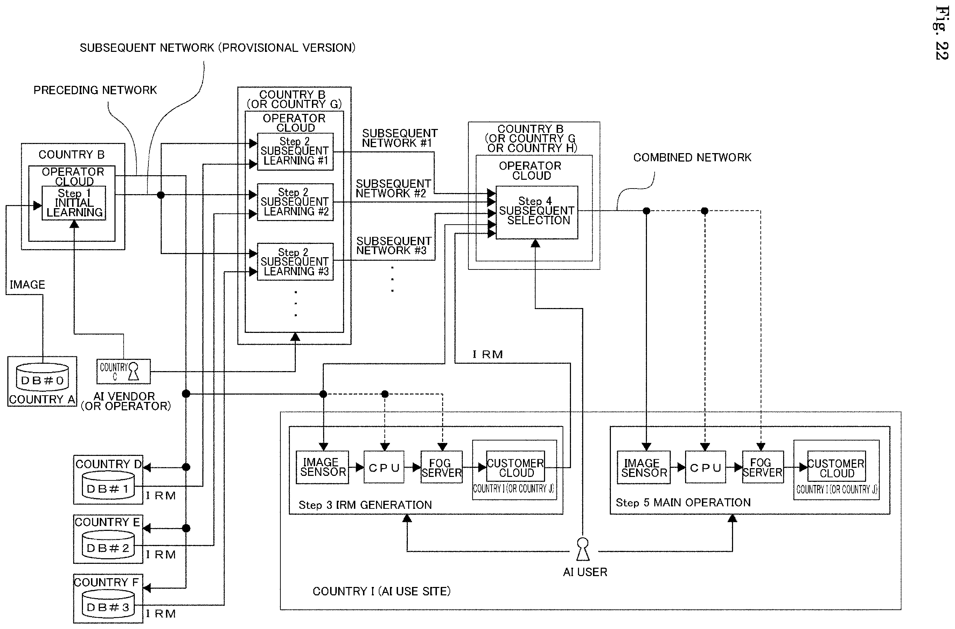

   Fig. 22 is a diagram for describing another operation example of the information processing system as an embodiment.
[Fig. 23]

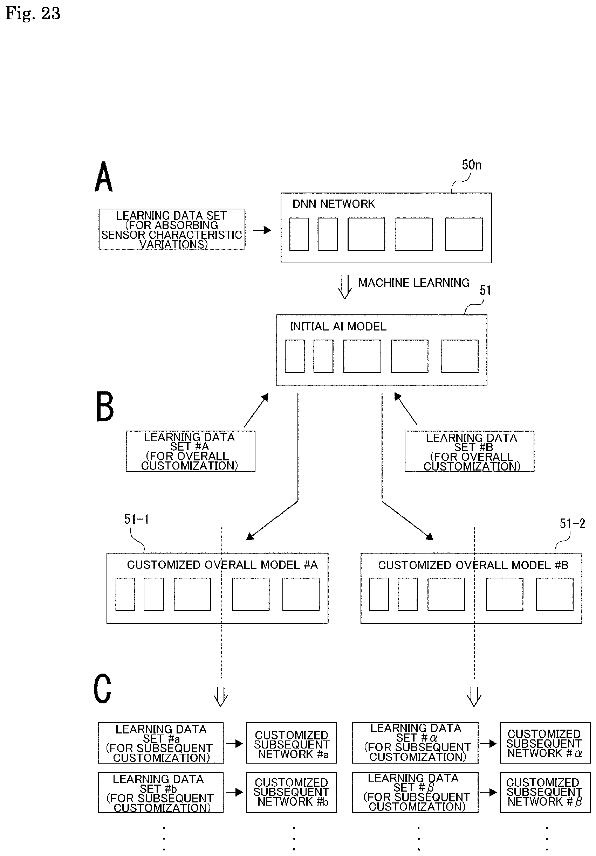

   Fig. 23 is an explanatory diagram of a modification of AI customization.
[Fig. 24]

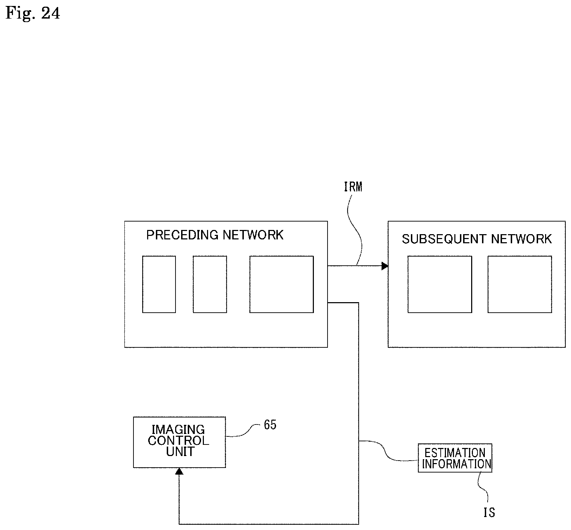

   Fig. 24 is an explanatory diagram of a modification in which an output of a preceding network is fed back to control of imaging settings.

### [Description of Embodiments]

Hereinafter, embodiments according to the present technology will be described in the following order with reference to the accompanying drawings.
<1. Overview of information processing system>
<2. Configuration of information processing device>
<3. Adaptation method as embodiment>
<4. Processing procedure>
<5. Downsizing of subsequent network>
<6. Operation example of system>
<7. Modification of AI customization>
<8. Modifications>
<9. Summary of embodiments>
<10. Present technique>

### <1. Overview of information processing system>

Fig. 1 is a block diagram illustrating a schematic configuration example of an information processing system 100 as an embodiment according to the present technology.

As illustrated in the figure, the information processing system 100 includes a server device 1, one or a plurality of user terminals 2, a plurality of cameras 3, and a fog server 4. In the present example, the server device 1 is configured to be able to perform mutual communication with the user terminal 2 and the fog server 4 via a network 5 such as the Internet.

The server device 1, the user terminal 2, and the fog server 4 are configured as information processing devices each including a microcomputer including a central processing unit (CPU), a read only memory (ROM), and a random access memory (RAM).

Here, the user terminal 2 is an information processing device assumed to be used by a user who is a recipient of a service that uses the information processing system 100. In addition, the server device 1 is an information processing device assumed to be used by a provider of the service.

Each of the cameras 3 includes, for example, an image sensor such as a charge coupled device (CCD) image sensor or a complementary metal oxide semiconductor (CMOS) image sensor, and captures an image of a subject to obtain image data (captured image data) which is digital data. In addition, each of the cameras 3 also has a function of performing artificial intelligence (AI) processing, which is processing using an AI model, on the captured image as described later.

Each of the cameras 3 is configured to be capable of data communication with the fog server 4, and is capable of transmitting various types of data such as processing result information indicating a result of image processing using the AI model to the fog server 4 and receiving various types of data from the fog server 4, for example.

Here, the information processing system 100 illustrated in Fig. 1 is assumed to be used in such a manner that the fog server 4 or the server device 1 generates analysis information of a subject based on information (hereinafter referred to as "processing result information") indicating an AI processing result obtained by AI processing of each of the cameras 3 and allows the user to browse the generated analysis information via the user terminal 2.

In this case, applications of various monitoring cameras are conceivable as applications of each of the cameras 3. Examples of the applications include monitoring cameras for the inside of stores, offices, houses, and the like, monitoring cameras (including traffic monitoring cameras and the like) for monitoring of the outside of parking lots, streets, and the like, monitoring cameras for manufacturing lines in factory automation (FA) and industrial automation (IA), and monitoring cameras for monitoring of the inside and the outside of vehicles.

For example, in the case of the application of the monitoring cameras in a store, it is conceivable to arrange the plurality of cameras 3 at predetermined positions in the store such that the user can confirm customer groups (gender, age groups, and the like) of customers, behavior (flow) in the store, and the like. In that case, as the above-described analysis information, it is conceivable to generate information regarding the customer groups of the customers, information regarding the flow in the store, information regarding a congestion state in a checkout register (for example, waiting time information at the checkout register), and the like.

Alternatively, in the case of the application of the traffic monitoring cameras, it is conceivable to arrange each of the cameras 3 at each position in the vicinity of a road such that the user can recognize information such as a number (vehicle number), a vehicle color, a vehicle type, and the like regarding a passing vehicle. In this case, it is conceivable to generate these pieces of information such as the number, the vehicle color, the vehicle type, and the like as the above-described analysis information.

In addition, in a case where the traffic monitoring cameras are used in a parking lot, it is conceivable to arrange the cameras so as to be capable of monitoring parked vehicles, monitor whether or not there is a suspicious person performing suspicious behavior around each vehicle, and in a case where there is a suspicious person, notify that there is a suspicious person, attributes (gender, an age group, clothes, and the like) of the suspicious person, and the like.

Furthermore, it is also conceivable to monitor an empty space in a town or the parking lot and notify the user of a place of a space where a vehicle can be parked.

It is assumed that the fog server 4 is arranged for each monitoring target, for example, arranged in a store as a monitoring target together with each of the cameras 3 in the above-described application of monitoring the store. Since the fog server 4 is provided for each monitoring target such as the store in this manner, it is not necessary for the server device 1 to directly receive transmission data from the plurality of cameras 3 in the monitoring target, and a processing load of the server device 1 can be mitigated.

Note that, in a case where there are a plurality of stores as monitoring targets and all the stores belong to the same affiliation, it is also conceivable that one fog server 4 is provided for a plurality of stores instead of being provided for each store. That is, one fog server 4 is not limited to be provided for each monitoring target, and one fog server 4 can be provided for a plurality of monitoring targets.

In addition, the information processing system 100 may adopt a configuration in which the fog server 4 is omitted and each of the cameras 3 is directly connected to the network 5 such that the server device 1 directly receives transmission data from the plurality of cameras 3.

The server device 1 is an information processing device having a function of comprehensively managing the information processing system 100.

The server device 1 has a license authorization function F1, an account service function F2, and an AI service function F3 as illustrated in the figure as functions related to the management of the information processing system 100.

The license authorization function F1 is a function of performing processing related to various types of authentication. Specifically, in the license authorization function F1, processing related to device authentication of each of the cameras 3 and processing related to authentication of data such as an AI model used in the cameras 3 are performed.

In the license authorization function F1, regarding the authentication of the cameras 3, processing of issuing a device ID for each of the cameras 3 is performed in the case of being connected to the cameras 3 via the network 5 (in this example, connection is made via the fog server 4).

In addition, regarding the authentication of the AI model, processing of issuing a unique ID (AI model ID) is performed for an AI model for which registration application has been made.

In addition, in the license authorization function F1, processing of issuing various keys, certificates, and the like for enabling secure communication between the camera 3 and the server device 1 to a manufacturer of the camera 3 (particularly, a manufacturer of an image sensor 30 to be described later) is performed, and processing for stopping or updating the certificate validity is also performed.

Furthermore, in the license authorization function F1, in a case where user registration (registration of account information accompanied by issuance of a user ID) is performed by the account service function F2 to be described below, processing of associating the camera 3 (a device ID) purchased by a user with the user ID is also performed.

The account service function F2 is a function of generating and managing the account information of the user. The account service function F2 receives input of user information, and generates the account information based on the input user information (generates the account information including at least the user ID and password information).

The AI service function F3 is a function for providing the user with a service related to use of the camera 3 as an AI camera.

As one of such AI service functions F3, a function of deploying an AI model for the camera 3 based on an instruction from the user can be exemplified. The deployment referred to herein means transmission processing for installing an AI model to be usable in a target device.

In addition, as one of the AI service functions F3, a function related to generation of the above-described analysis information can also be exemplified. That is, it is the function of generating the analysis information of the subject based on the processing result information of the AI processing in the camera 3 and performing processing for causing the user to browse the generated analysis information via the user terminal 2.

Furthermore, as one of the AI service functions F3, a relearning function of the AI model can be exemplified. That is, it is the relearning function for the AI model installed in the camera 3. In the present embodiment, processing for adapting the AI model to a use environmental condition of the camera 3 (image sensor) is performed by the relearning function, and this point will be described again later.

Here, the configuration in which the license authorization function F1, the account service function F2, and the AI service function F3 are implemented by the server device 1 alone has been exemplified in the above description, but these functions can also be shared and implemented by a plurality of information processing devices. For example, it is conceivable the above-described functions are performed by information processing devices, respectively. Alternatively, it is also possible to adopt a configuration in which a plurality of information processing devices share one of the above-described functions.

### <2. Configuration of information processing device>

Fig. 2 is a block diagram illustrating an example a hardware configuration of the server device 1.

Note that an example of a hardware configuration of each of the user terminal 2 and the fog server is also similar to that illustrated in Fig. 2.

As illustrated in the figure, the server device 1 includes a CPU 11. The CPU 11 functions as an arithmetic processing unit that performs various types of processing described as processing of the server device 1 so far, and executes the various types of processing according to a program stored in a ROM 12 or a nonvolatile memory unit 14 such as an electrically erasable programmable read-only memory (EEP-ROM) or a program loaded from a storage unit 19 to a RAM 13. The RAM 13 also appropriately stores data and the like necessary for the CPU 11 to execute the various types of processing.

The CPU 11, the ROM 12, the RAM 13, and the nonvolatile memory unit 14 are connected to each other via a bus 23. In addition, an input/output interface (I/F) 15 is also connected to this bus 23.

An input unit 16 including an operating element or an operation device is connected to the input/output interface 15. For example, as the input unit 16, any of various operating elements or operation devices such as a keyboard, a mouse, a key, a dial, a touch panel, a touch pad, and a remote controller is assumed.

A user operation is detected by the input unit 16 and a signal in accordance with the input operation is analyzed by the CPU 11.

In addition, a display unit 17 including a liquid crystal display (LCD), an organic electroluminescence (EL) display, or the like, and a sound output unit 18 including a speaker or the like are connected to the input/output interface 15 as one entity or separate entities. The display unit 17 is used for displaying various types of information, and includes, for example, a display device provided in a housing of a computer device or a separate display device connected to the computer device.

The display unit 17 executes display of an image for various types of image processing, a moving image to be processed, and the like in a display screen based on an instruction from the CPU 11. In addition, the display unit 17 displays various operation menus, icons, messages, and the like, that is, a graphical user interface (GUI) based on an instruction from the CPU 11.

In some cases, a storage unit 19 including a hard disk drive (HDD), a solid-state memory, or the like and a communication unit 20 including a modem or the like are connected to the input/output interface 15.

The communication unit 20 performs communication processing over a transmission path such as the Internet, communication such as wired/wireless communication or bus communication with various types of equipment, and the like.

In addition, a drive 21 is also connected to the input/output interface 15 as necessary, and a removable recording medium 22 such as a magnetic disk, an optical disc, a magneto-optical disc, or a semiconductor memory is mounted therein as appropriate.

The drive 21 can be used to read a data file such as a program used for each instance of processing from the removable recording medium 22. The read data file is stored in the storage unit 19 or an image and a sound included in the data file is output to the display unit 17 and the sound output unit 18, respectively. In addition, a computer program or the like read from the removable recording medium 22 is installed in the storage unit 19 as necessary.

In the computer device having the hardware configuration as described above, for example, software for the processing of the present embodiment can be installed via network communication using the communication unit 20 or via the removable recording medium 22. Alternatively, the software may be stored in advance in the ROM 12, the storage unit 19, or the like.

As the CPU 11 performs processing operations based on various programs, information processing and communication processing necessary for the server device 1 are executed. Note that the server device 1 is not limited to the single computer device as illustrated in Fig. 2, and may be configured by systematizing a plurality of computer devices. The plurality of computer devices may be systematized using a local area network (LAN) or the like, or may be arranged in remote places via a virtual private network (VPN) or the like using the Internet or the like. The plurality of computer devices may include a computer device as a server group (cloud) that can be used by a cloud computing service.

Fig. 3 is a block diagram illustrating an example of a configuration of the camera 3.

As illustrated in the figure, the camera 3 includes the image sensor 30, an imaging optical system 31, an optical system drive unit 32, a control unit 33, a memory unit 34, a communication unit 35, and a sensor unit 36. The image sensor 30, the control unit 33, the memory unit 34, the communication unit 35, and the sensor unit 36 are connected via a bus 37, and can perform data communication with each other.

The imaging optical system 31 includes lenses such as a cover lens, a zoom lens, and a focus lens, and a diaphragm (iris) mechanism. Light (incident light) from a subject is guided by the imaging optical system 31 and condensed on a light receiving surface of the image sensor 30.

The optical system drive unit 32 comprehensively represents drive units of the zoom lens, the focus lens, and the diaphragm mechanism included in the imaging optical system 31. Specifically, the optical system drive unit 32 includes actuators for driving the zoom lens, the focus lens, and the diaphragm mechanism, respectively, and drive circuits of the actuators.

The control unit 33 includes, for example, a microcomputer including a CPU, a ROM, and a RAM, and performs overall control of the camera 3 by the CPU executing various types of processing according to a program stored in the ROM or a program loaded in the RAM.

In addition, the control unit 33 instructs the optical system drive unit 32 to drive the zoom lens, the focus lens, the diaphragm mechanism, and the like. The optical system drive unit 32 executes movement of the focus lens and the zoom lens, opening and closing of diaphragm blades of the diaphragm mechanism, and the like in response to these driving instructions.

In addition, the control unit 33 controls writing and reading of various types of data to and from the memory unit 34.

The memory unit 34 is a nonvolatile storage device such as an HDD or a flash memory device, for example, and is used for storing data that is used when the control unit 33 executes the various types of processing. In addition, the memory unit 34 can also be used as a storage destination (recording destination) of image data output from the image sensor 30.

The control unit 33 performs various types of data communication with an external device via the communication unit 35. The communication unit 35 in this example is configured to be able to perform data communication with at least the fog server 4 illustrated in Fig. 1. Alternatively, as the communication unit 35, communication via the network 5 may be enabled to perform data communication may be performed with the server device 1.

The sensor unit 36 comprehensively represents sensors other than the image sensor 30 included in the camera 3. Examples of the sensors provided in the sensor unit 36 can include a global navigation satellite system (GNSS) sensor and an altitude sensor for detecting a position and altitude of the camera 3, respectively, a temperature sensor for detecting an environmental temperature, and a motion sensor such as an acceleration sensor or an angular velocity sensor for detecting a motion of the camera 3.

The image sensor 30 is configured as a solid-state imaging element of a CCD type, a CMOS type, or the like, for example, and includes an imaging unit 41, an image signal processing unit 42, a sensor internal control unit 43, an AI processing unit 44, a memory unit 45, a computer vision processing unit 46, and a communication interface (I/F) 47 as illustrated in the figure. These units can perform data communication with each other via a bus 48. The image sensor 30 is an embodiment of an information processing device according to the present technology.

The imaging unit 41 includes a pixel array unit in which pixels having photoelectric conversion elements such as photodiodes are two-dimensionally arrayed, and a read circuit that reads an electric signal obtained by photoelectric conversion from each of the pixels included in the pixel array unit. The read circuit performs, for example, correlated double sampling (CDS) processing, automatic gain control (AGC) processing, and the like on the electric signal obtained by the photoelectric conversion, and further performs analog to digital (A/D) conversion processing.

The image signal processing unit 42 performs preprocessing, synchronization processing, YC generation processing, resolution conversion processing, codec processing, and the like on a captured image signal which is digital data after the A/D conversion processing.

In the preprocessing, clamp processing of clamping a black level of red (R), green (G), and blue (B) to a predetermined level, correction processing between color channels of R, G, and B, and the like are performed on the captured image signal. In the synchronization processing, color separation processing is performed such that image data for each pixel has all of R, G, and B color components. For example, in the case of an imaging element using a Bayer array color filter, demosaic processing is performed as the color separation processing. In the YC generation processing, a luminance (Y) signal and a color (C) signal are generated (separated) from image data of R, G, and B. In the resolution conversion processing, the resolution conversion processing is performed on image data having been subjected to various types of signal processing.

In the codec processing, for example, encoding processing for recording or communication or file generation is performed on the image data having been subjected to the above-described various types of processing. In the codec processing, it is possible to generate a file in a format such as MPEG-2 (MPEG: Moving Picture Experts Group or H. 264 as a file format of a moving image. In addition, it is also conceivable to generate a file in a format such as Joint Photographic Experts Group (JPEG), Tagged Image File Format (TIFF), or Graphics Interchange Format (GIF) as a still image file.

The sensor internal control unit 43 includes a microcomputer including, for example, a CPU, a ROM, a RAM, and the like, and comprehensively controls operations of the image sensor 30. For example, the sensor internal control unit 43 performs execution control of an imaging operation by issuing an instruction to the imaging unit 41. In addition, execution control of processing is also performed with respect to the AI processing unit 44, the image signal processing unit 42, and the computer vision processing unit 46.

In addition, when an AI model (configuration data of the AI model) is deployed from the server device 1 to the image sensor 30 as described later, the sensor internal control unit 43 performs processing such that the AI model is configured in the AI processing unit 44. That is, it is the processing of setting the AI model in the AI processing unit 44 such that the AI processing unit 44 can execute AI processing using the AI model.

The AI processing unit 44 includes a programmable arithmetic processing device such as a CPU, a field programmable gate array (FPGA), or a digital signal processor (DSP), and performs AI processing on a captured image.

Examples of the AI processing by the AI processing unit 44 can include image recognition processing. The image recognition processing mentioned here broadly means processing of recognizing image content, and examples thereof can include recognition processing of a type of a subject (for example, human, an animal, a car, a building, or the like) and recognition processing of presence/absence or a range of a subject (so-called object detection processing).

The function of the AI processing by the AI processing unit 44 can be switched by changing an AI model (algorithm of AI processing) to be configured in the AI processing unit 44.

The memory unit 45 includes a nonvolatile memory, and is used for storing data necessary for performing the AI processing by the AI processing unit 44. Specifically, the configuration data (for example, various weighting factors used in a convolution operation for a neural network, data indicating a structure of the neural network, and the like) of the AI model is stored in the memory unit 45.

In addition, the memory unit 45 is also used to hold the captured image data processed by the image signal processing unit 42 in the present example.

The computer vision processing unit 46 performs rule-based image processing as image processing on the captured image data. Examples of the rule-based image processing here can include super-resolution processing.

The communication interface 47 is an interface that performs communication with the respective units connected via the bus 37, such as the control unit 33 and the memory unit 34 outside the image sensor 30. For example, the communication interface 47 performs communication to acquire an AI model and the like used by the AI processing unit 44 from the outside based on the control of the sensor internal control unit 43.

In addition, processing result information of AI processing by the AI processing unit 44 is output to the outside of the image sensor 30 via the communication interface 47.

Here, in the image sensor 30, the sensor internal control unit 43 can perform data communication with the server device 1 via the communication interface 47, the communication unit 35, and the fog server 4. As a result, the sensor internal control unit 43 can receive various types of data such as configuration data of an AI model from the server device 1 and transmit various types of data such as processing result information by the AI processing unit 44 to the server device 1 as described later.

Meanwhile, as described above, the image sensor 30 includes the AI processing unit 44 that performs AI processing, the sensor internal control unit 43 as a computer device, and the like, in addition to the imaging unit 41 including the pixel array unit in the present example. An example of a structure of such an image sensor 30 will be described with reference to Fig. 4. Note that the structure illustrated in Fig. 4 is merely an example, and other structures can be adopted as a matter of course.

As illustrated in Fig. 4, the image sensor 30 in the present example has a two-layer structure (laminated structure) in which two dies of a die D1 and a die D2 are laminated. Specifically, the image sensor 30 in the present example is configured as a one-chip semiconductor device in which the die D1 and the die D2 are bonded to each other. The die D1 is a die in which the imaging unit 41 is formed, and the die D2 is a die including the image signal processing unit 42, the sensor internal control unit 43, the AI processing unit 44, the memory unit 45, the computer vision processing unit 46, and the communication interface 47.

The die D1 and the die D2 are physically and electrically connected by, for example, a chip-to-chip bonding technique such as Cu-Cu bonding.

### <3. Adaptation method as embodiment>

First, an overview of an AI model (hereinafter referred to as an "AI model 50") used in the camera 3 of the present embodiment will be described with reference to Fig. 5.

In the present embodiment, as the AI model 50, an AI model having a neural network, specifically, a deep neural network (DNN) is assumed. More specifically, an AI model that performs inference processing as image recognition processing using a captured image (RGB image in this example) obtained by the imaging unit 41 in the image sensor 30 as input data is used.

In the figure, the post-processing unit 55 decodes recognition result information indicating a result of the image recognition processing based on output data of the AI model 50. In the present example, the image recognition processing is processing of recognizing attributes such as age and gender of a target subject as a person, and in response thereto, the post-processing unit 55 decodes information indicating a recognition result of these attributes such as age and gender based on the output data from the AI model.

In addition, in the AI model 50 in the present example, a value representing a score (likelihood) for the recognition result is calculated, and the post-processing unit 55 decodes this value and obtains information including the score as the recognition result information.

In the present embodiment, regarding the AI model 50 that performs the inference processing as the image recognition processing as described above, it is assumed that the AI model 50 as an initial AI model 51 is first deployed to the image sensor 30 in the camera 3.

Fig. 6 is an explanatory diagram of the initial AI model 51.

As the initial AI model 51, the general-purpose AI model 50 machine-learned so as to be able to correspond to various use environmental conditions of the image sensor 30 is prepared.

Fig. 6A is an explanatory diagram of machine learning for generating the initial AI model 51. In the machine learning in this case, a DNN network 50n having a predetermined network structure for implementing inference processing as image recognition processing is prepared, and a learning data set including a plurality of pieces of image data as input data for learning and label data indicating ground truth information of an image recognition result for each of the pieces of image data is prepared.

In this case, regarding the image data prepared as the input data for learning, pieces of image data respectively corresponding to conditions assumed as the use environmental conditions of the image sensor 30 are prepared such that the initial AI model 51 after learning has versatility. That is, captured images obtained when imaging is performed under the respective use environmental conditions are prepared. For example, in a case where the assumed use environmental conditions are conditions related to areas of use such as Japan, the United States, and Europe, for each of the areas of use, a captured image obtained when imaging is performed in the region is prepared.

The initial AI model 51 having versatility is generated by performing machine learning on the DNN network 50n using the learning data set including the image data corresponding to the respective assumed use environmental conditions as described above and the label data (Fig. 6B).

Here, it is conceivable to customize (adapt) the initial AI model 51 generated in this manner to a model suitable for the use environmental condition of the image sensor 30.

It is conceivable to implement this customization by a method of relearning the entire network of the initial AI model 51. However, as described above, the number of times of learning required for relearning the entire network increases, which leads to an increase in time required for customization. In addition, the number of pieces of learning image data to be uploaded to the server device 1 by a user for relearning also increases, which leads to an increase in the amount of communication data required for customization.

Therefore, in the present embodiment, a method is adopted in which the initial AI model is divided at a predetermined position, and only a subsequent network, which is a network subsequent to a predetermined intermediate layer, is to be customized.

Fig. 7 is an explanatory diagram of division of the initial AI model 51 and a preceding network and a subsequent network.

Regarding a plurality of intermediate layers included in the initial AI model 51, the initial AI model 51 is divided at a predetermined interlayer position as a division position Dv (Fig. 7A). A network on the preceding side of the division position Dv is referred to as a "preceding network", and a network on the subsequent side is referred to as a "subsequent network" (Fig. 7B).

In this case, the preceding network outputs a feature map obtained in an intermediate layer immediately before the division position Dv. The feature map obtained in the intermediate layer immediately before the division position Dv and output by the preceding network in this manner is hereinafter referred to as an "intermediate feature map IRM".

As described hereinafter, the intermediate feature map IRM is transmitted from the image sensor 30 side (edge side) to the server device 1 side (cloud side) for customization of the subsequent network in the present embodiment.

The intermediate feature map IRM is data that is difficult to identify personal information as it is. Therefore, even in a case where it is necessary to transmit the intermediate feature map IRM from the image sensor 30 side to the server device 1 side as described above, it is possible to reduce a possibility of leakage of personal information. That is, the possibility of leakage of personal information is reduced when an artificial intelligence model on the edge side is adapted to a use environmental condition of a sensor device.

In the present embodiment, the division position Dv is set to the second or subsequent interlayer position among interlayer positions of the intermediate layers in the initial AI model 51. In other words, the intermediate feature map IRM is output data of the second or subsequent intermediate layer in the initial AI model 51.

It can be said that data with which it is more difficult to identify personal information as compared with output data of the first intermediate layer is obtained as the output data in the second or subsequent intermediate layer (since input data is further compressed dimensionally).

Therefore, the effect of reducing the possibility of leakage of personal information can be enhanced by setting the division position Dv as described above.

In the present embodiment, as a customization method of the initial AI model 51, a method is adopted in which a plurality of candidate subsequent networks are prepared, and one subsequent network is selected from among the candidate subsequent networks based on the intermediate feature map IRM acquired from the target image sensor 30.

Fig. 8 is an explanatory diagram of an example of a method of generating a candidate subsequent network.

A plurality of candidate subsequent networks are generated by relearning only the subsequent network in the initial AI model 51 using different learning data sets.

As illustrated in the figure, in the present example, N types of learning data sets (a first learning data set to an Nth learning data set) are prepared as the learning data sets for relearning, and N types of subsequent networks are generated by performing relearning N times using corresponding one of these N types of learning data sets each time as the relearning of the subsequent network in the initial AI model 51. At this time, the relearning of only the subsequent network can be performed with a fixed weighting factor in the preceding network.

In this case, each of the learning data sets in which a type of image data included as input data for learning is different between the learning data sets is used. Specifically, the learning data sets respectively including pieces of image data captured in mutually different environments as the input data for learning are used. For example, the first learning data set includes a plurality of pieces of image data captured in a first environment as input data for learning, and the second learning data set includes a plurality of pieces of image data captured in a second environment different from the first environment as input data for learning.

Since the relearning of the subsequent network is performed using such N types of learning data sets, N candidate subsequent networks each of which is suitable for one of N types of environments are generated as illustrated in Fig. 9.

In the present embodiment, the N types of candidate subsequent networks generated in this manner are stored in a storage device readable by the CPU 11 of the server device 1, such as the storage unit 19 of the server device 1.

The server device 1 selects one subsequent network suitable for the use environmental condition of the image sensor 30 based on the intermediate feature map IRM acquired from the target image sensor 30 from among these candidate subsequent networks.

Fig. 10 is a diagram for describing functions of the server device 1 and the image sensor 30 related to such selection of a subsequent network.

As illustrated in the figure, the server device 1 has a function as a subsequent network acquisition unit F11, and the image sensor 30 has a function as a transmission processing unit F31. In the present example, the function as the subsequent network acquisition unit F11 is a function implemented by software processing by the CPU 11 of the server device 1, and the function as the transmission processing unit F31 is a function implemented by software processing of the sensor internal control unit 43 in the image sensor 30.

In the image sensor 30, the transmission processing unit F31 performs processing of transmitting, to the outside, the intermediate feature map IRM obtained when input data is given to the initial AI model 51. Specifically, processing is performed to transmit the intermediate feature map IRM obtained when a captured image obtained by the imaging unit 41 (that is, the image captured in a use environment of the image sensor 30) is given as the input data of the initial AI model 51 to the server device 1. In this case, the transmission processing unit F31 (the sensor internal control unit 43) performs processing of outputting the intermediate feature map IRM to the outside of the image sensor 30 via the communication interface 47, and instructs, for example, the control unit 33 to perform the processing of transmitting the intermediate feature map IRM to the server device 1. As a result, the intermediate feature map IRM is transmitted to the server device 1 via the communication unit 35 in the camera 3 and the fog server 4.

In the server device 1, the subsequent network acquisition unit F11 receives the intermediate feature map IRM transmitted from the image sensor 30 side in this manner, and selects one subsequent network from among a plurality of candidate subsequent networks based on the input intermediate feature map IRM.

At this time, various methods are conceivable as a method of selecting one subsequent network based on the intermediate feature map IRM from the plurality of candidate subsequent networks.

As an example, there is a method in which inference processing is executed with the intermediate feature map IRM given as input data for each candidate subsequent network, and one subsequent network is selected based on a score for an inference result calculated by the post-processing unit 55 as illustrated in Fig. 11, for example. Specifically, a subsequent network having the best score is selected as the subsequent network suitable for the use environment of the target image sensor 30.

Note that, in a case where the number of candidate subsequent networks is large, for example, it is conceivable to reduce the amount of processing related to selection by adopting a binary search method or the like.

Alternatively, it is also conceivable to calculate a score for each of N candidates with the intermediate feature map IRM given as input data in a predetermined order until a subsequent network whose score is equal to or greater than a predetermined threshold is detected and to select the detected subsequent network as the suitable subsequent network.

In addition, it is also conceivable to select the suitable subsequent network based on analysis results of the intermediate feature map IRM instead of the selection based on scores. For example, it is conceivable to obtain the correspondence relationship between a distribution of values in the intermediate feature map IRM and a subsequent network suitable for the distribution is obtained in advance and to select the suitable subsequent network based on an analysis result of the distribution.

Alternatively, it is also conceivable to perform selection of a subsequent network based on the intermediate feature map IRM using AI. Specifically, for example, it is conceivable to use an AI model obtained by machine learning using the intermediate feature map IRM as input data for learning and using ground truth information of a subsequent network to be selected for this intermediate feature map IRM as training data.

Fig. 12 is a diagram for describing functions of the server device 1 and the image sensor 30 related to deployment of a selected subsequent network.

As illustrated in the figure, the server device 1 has a function as a transmission processing unit F12, and the image sensor 30 has a function as a reception processing unit F32 as the functions related to deployment of a selected subsequent network. Note that, in the present example, the functions of the transmission processing unit F12 and the reception processing unit F32 are also functions implemented by software processing by the CPU 11 of the server device 1 and software processing of the sensor internal control unit 43 in the image sensor 30, respectively.

In the server device 1, the transmission processing unit F12 performs processing of transmitting configuration data of a subsequent network selected by the subsequent network acquisition unit F11 to the outside. Specifically, processing is performed to transmit the configuration data of the subsequent network selected by the subsequent network acquisition unit F11 to the image sensor 30 via the communication unit 20. As this processing is performed, the configuration data of the subsequent network is transmitted to the image sensor 30 via the fog server 4.

In the image sensor 30, the reception processing unit F32 performs processing of receiving the configuration data of the subsequent network transmitted by the transmission processing unit F12, in other words, performs processing of receiving configuration data of one subsequent network selected from among a plurality of candidate subsequent networks by the server device 1 based on the intermediate feature map IRM transmitted by the transmission processing unit F31 (see Fig. 10) described above.

Although not illustrated, tin he image sensor 30, a subsequent network in the initial AI model 51 set in the AI processing unit 44 is updated based on the configuration data received by the reception processing unit F32 in this manner. Thereafter, in the AI processing unit 44, inference processing is performed using the updated subsequent network, that is, the subsequent network selected on the server device 1 side as being suitable for the use environmental condition of the image sensor 30.

Here, it has been mentioned that the division position Dv between the preceding network and the subsequent network is set to the second or subsequent interlayer position in the above description.

Fig. 13 illustrates visualized images of the intermediate feature map IRM obtained at two different division positions Dv for the initial AI model 51. Specifically, visualized images of the intermediate feature map IRM when the division position Dv is set to an interlayer position of the first and second intermediate layers and visualized images of the intermediate feature map IRM when the division position Dv is set to an interlayer position of the third and fourth intermediate layers are illustrated.

From Fig. 13, it can be seen that, in an intermediate layer on the subsequent side than the first intermediate layer, an image size of the intermediate feature map IRM tends to be smaller, and it is more difficult to identify personal information in terms of image content when visualized.

It is conceivable to set the division position Dv set as follows in view of the above characteristics of the intermediate feature map IRM.

As one method, it is conceivable to perform the setting such that the number of pixels of an image area related to personal information when the intermediate feature map IRM is visualized is less than a predetermined number of pixels.

Fig. 14 illustrates a comparison between a captured image as input data with respect to the initial AI model 51 and a visualized image of the intermediate feature map IRM obtained in the initial AI model 51 when the captured image is given as the input data. Here, an example is illustrated in which the captured image includes an image area (referred to as an "image area Ar1") in which a human face is captured as an image area related to personal information. In this case, in the visualized image of the intermediate feature map IRM, there is an image area related to the personal information corresponding to the image area Ar1, such as an image area Ar2 illustrated in the figure. In this case, the division position Dv is set such that the number of pixels of the image area Ar2 is less than the predetermined number of pixels.

At this time, as the "predetermined number of pixels", it is sufficient to set the number of pixels with which it is difficult to identify the personal information when the intermediate feature map IRM is visualized, and experimentally, for example, 144 pixels corresponding to 12×12 pixels is desirable, and 64 pixels corresponding to 8×8 pixels is more desirable.

In addition, as another method of setting the division position Dv, it is conceivable to perform the setting such that the intermediate feature map IRM is data that cannot be decoded by a decoding unit of an auto-encoder obtained by self-encoding learning of a target AI model.

Here, the self-encoding learning is preliminary learning for creating the auto-encoder, and specifically means unsupervised learning in which output data is matched with input data.

Fig. 15 is an explanatory diagram of such another method of setting a division position.

In this case, as illustrated in Fig. 15A, first, self-encoding learning is performed on the DNN network 50n used for the initial AI model 51 to generate an auto-encoder 60. Then, as illustrated in Fig. 15B, the intermediate feature map IRM is input to a decoding unit 60a of the auto-encoder 60, and it is determined whether or not the intermediate feature map IRM has been decoded. It is conceivable that this determination is performed based on a result obtained by comparing image data used as input data to obtain the intermediate feature map IRM with output data of the decoding unit 60a.

For example, the division position Dv for the initial AI model 51 is sequentially shifted to the subsequent side, and the determination using the decoding unit 60a as described above is performed for the intermediate feature map IRM at each division position Dv. At this time, it is conceivable to set, as the division position Dv to be adopted, the division position Dv when it is determined that decoding of the intermediate feature map IRM is impossible.

### <4. Processing procedure>

Fig. 16 is a flowchart illustrating an example of processing procedure for implementing the adaptation method as the embodiment described above.

In Fig. 16, processing indicated as "server device" is executed by the CPU 11 in the server device 1 based on a program stored in a predetermined storage device, for example, the ROM 12 or the like, and processing indicated as "image sensor" is executed by the CPU of the sensor internal control unit 43 in the image sensor 30 based on a program stored in a predetermined storage device such as the ROM of the sensor internal control unit 43.

First, on the server device 1 side, in step S101, the CPU 11 waits until an instruction of a target edge, that is, an instruction of the image sensor 30 as a target of adaptation of a subsequent network is issued. In the present example, the instruction of the target edge is issued by the user terminal 2 to the server device 1 based on an operation input performed by a user to the user terminal 2.

When the instruction of the target edge is issued, the CPU 11 instructs the target image sensor 30 to execute an intermediate feature map generation operation in step S102. That is, the execution instruction for the operation of generating the intermediate feature map IRM is issued.

On the image sensor 30 side, in step S201, the sensor internal control unit 43 waits for such an execution instruction for the intermediate feature map generation operation, and performs processing of executing the generation operation in step S202 when the execution instruction is issued. That is, an imaging operation by the imaging unit 41 is executed, and a captured image obtained by the imaging operation is given as input data of the initial AI model 51 in the AI processing unit 44, thereby generating the intermediate feature map IRM.

In step S203 subsequent to step S202, the sensor internal control unit 43 performs processing of transmitting the intermediate feature map IRM to the server device 1. This corresponds to the above-described processing of the transmission processing unit F31.

On the server device 1 side, the CPU 11 waits for reception of the intermediate feature map IRM from the image sensor 30 side in step S103, and executes processing of selecting a subsequent network based on the received intermediate feature map IRM in step S104 when the intermediate feature map IRM is received. Specifically, as described above as the subsequent network acquisition unit F11, processing of selecting one subsequent network from among a plurality of candidate subsequent networks based on the received intermediate feature map IRM is performed. Note that the specific example of the method of selecting a subsequent network based on the received intermediate feature map IRM has already been described, and thus redundant description is avoided.

In step S105 following step S104, the CPU 11 performs processing of transmitting configuration data of the selected subsequent network to the image sensor 30 (that is, processing corresponding to the above-described transmission processing unit F12) and ends the series of processing illustrated in Fig. 16.

On the image sensor 30 side, in step S204, the sensor internal control unit 43 waits for reception of the configuration data transmitted in step S105 and performs processing of configuring the subsequent network based on the configuration data in step S205 when the configuration data is received. That is, the subsequent network of the initial AI model 51 in the AI processing unit 44 is updated based on the configuration data.

The sensor internal control unit 43 ends the series of processing illustrated in Fig. 16 in response to execution of the processing of step S205.

Note that the example in which the subsequent network selected by the server device 1 is directly transmitted to the edge side has been described in the above description. But it is also conceivable to perform relearning as fine tuning on the selected subsequent network and transmit the subsequent network after the relearning to the edge side.

### <5. Downsizing of subsequent network >

Here, it is assumed that there are few hardware resources that can be used for AI processing in a configuration in which the AI processing is performed in the AI processing unit 44 of the image sensor 30 as in the present embodiment, and accordingly, it is assumed that a neural network used for the AI processing is also limited in size.

Therefore, it is desirable to downsize a subsequent network.

However, there is a possibility that downsizing of a network may lead to a decrease in accuracy of inference processing such as a decrease in image recognition accuracy. Therefore, it is conceivable to adopt a method to which the following active learning is applied as a method for implementing reduction of a network size while suppressing a decrease in accuracy of inference processing for a subsequent network.

Fig. 17 is an explanatory diagram of a subsequent network generation method to which active learning is applied.

In this case, it is assumed that a small network is used as the subsequent network.

As machine learning of a learning device in which a preceding network in the initial AI model 51 and a small subsequent network are combined, machine learning using each corresponding environment image as input data for learning is performed for each of N types of environments assumed as use environments of the image sensor 30. As a result, N networks subjected to environmentally adaptive learning are obtained as the small subsequent network.

However, since the subsequent network in this case is a small network, it is difficult to expect high inference performance even if the environmentally adaptive learning as described above is performed.

Therefore, machine learning by active learning is performed such that a subsequent network that is small but specialized for an environment can be generated. Specifically, scores calculated by the post-processing unit 55 when the above-described environmentally adaptive learning is performed are referred to, and input image data having a moderate score (for example, in the range of about 0.5 to about 0.7, or the like) is presented to an annotator (see Fig. 17A). In the figure, a type of image data having a moderate score in this manner is represented as image data of "type B".

A relearning data set including image data corresponding to the type B as input data for learning is used to perform relearning for the entire network including the subsequent network as the small network (see Fig. 17B).

The above generation of a subsequent network by the active learning is performed for each of the N types of assumed environments.

As a result, for each of the N types of assumed environments, a subsequent network that is small but is specialized for the environment can be efficiently generated.

The subsequent network acquisition unit F11 in the server device 1 in this case selects one subsequent network from among a plurality of candidate subsequent networks generated by the active learning as described above based on the intermediate feature map IRM input from the target image sensor 30.

In addition, as a method of downsizing a subsequent network, distillation (knowledge distillation) can be exemplified.

As one specific method, a method of preparing a general-purpose and large master AI as a teacher model and performing distillation on the master AI can be exemplified. Specifically, as illustrated in Fig. 18, a subsequent network in the initial AI model 51 is used as a teacher model, which is a general-purpose and large master AI, and distillation is performed on the teacher model to generate a small subsequent network.

In the distillation in this case, not only downsizing of the network but also model adaptation in response to a use environmental condition of the target image sensor 30 is performed. As known, basically, in the distillation, a student model is trained using an inference result of the teacher model for the same input data as a soft target such that an inference result of the student model approximates to the soft target. At this time, when the intermediate feature map IRM input from the target image sensor 30 side is used as the input data common to the teacher model and the student model, the model adaptation in response to the use environmental condition of the image sensor 30 is performed together with the downsizing of the network.

In a case where the distillation as illustrated in Fig. 18 is performed, it is not necessary to generate a plurality of candidate subsequent networks in advance. That is, selection of one subsequent network from among a plurality of candidate subsequent networks prepared in advance is not performed to deploy a subsequent network suitable for a use environmental condition on the image sensor 30 side.

As understood from the above description, the subsequent network acquisition unit F11 in this case performs processing of generating one subsequent network based on a trained network serving as a base and the intermediate feature map IRM. Specifically, the subsequent network acquisition unit F11 in this case performs distillation based on the intermediate feature map IRM input from the image sensor 30 side using a subsequent network of the initial AI model 51 as a teacher model, thereby generating a small subsequent network suitable for the use environmental condition on the image sensor 30 side.

In addition, as another method of generating a small subsequent network to which distillation is applied, a method of using a subsequent network trained to be specialized for a certain environment as a teacher model instead of using a general-purpose subsequent network as the teacher model can be exemplified.

Fig. 19 is an explanatory diagram of such another method.

In this case, as a candidate for a teacher model in distillation, a plurality of large subsequent networks, which have been trained to be suitable for different use environments, respectively, are prepared (see Fig. 19A).

Then, the subsequent network acquisition unit F11 in this case selects one corresponding large subsequent network as the teacher model based on the intermediate feature map IRM input from the target image sensor 30 side from among the plurality of large candidate subsequent networks prepared in this manner (see Fig. 19B). That is, a use environment of the image sensor 30 is estimated from, for example, a numerical distribution or the like of the input intermediate feature map IRM, and the large subsequent network corresponding to the estimated use environment is selected.

Then, the subsequent network acquisition unit F11 in this case performs distillation processing using the intermediate feature map IRM input from the image sensor 30 side as input data of the teacher model and a student model as the distillation using the selected large subsequent network as the teacher model, thereby generating one subsequent network suitable for the use environment of the image sensor 30 (see Fig. 19C).

When the distillation as another method as described above is performed, it is possible to cope with a wider range of use environments as compared with a case where the distillation is performed using a general-purpose large subsequent network as a teacher model as illustrated in Fig. 18.

Note that the examples in which active learning or distillation is performed have been described as examples of downsizing of a subsequent network in the above description, but it is also conceivable to perform pruning or quantization as downsizing of a subsequent network.

For confirmation, a flowchart of Fig. 20 illustrates an example of processing procedure of the server device 1 and the image sensor 30, the example corresponding to a case where a small subsequent network is generated by distillation as described above.

Note that an example of processing procedure on the image sensor 30 side is similar to that described above with reference to Fig. 16, and thus redundant description is avoided.

On the server device 1 side, the CPU 11 in this case executes processing of step S110 instead of the processing of step S104 illustrated in Fig. 16 and executes processing of step S111 instead of the processing of step S105.

In step S110, the CPU 11 performs distillation processing on a large subsequent network based on the received intermediate feature map IRM. As this distillation processing, it is conceivable to perform either the distillation processing using a general-purpose large subsequent network as a teacher model as described above with reference to Fig. 18 or the distillation processing using a large subsequent network selected from among a plurality of large subsequent networks, which are candidate teacher models, as described above with reference to Fig. 19 as a teacher model.

In step S111 subsequent to step S110, the CPU 11 performs processing of transmitting configuration data of a small subsequent network obtained by the distillation processing to the image sensor 30.

### <6. Operation example of system>

An operation example of the information processing system 100 will be described with reference to Fig. 21.

Here, it is assumed that an overall AI model including a subsequent network selected based on the intermediate feature map IRM is deployed to an edge terminal (the image sensor 30 in this example). In Fig. 21, operation steps until this deployment is performed are divided into Step 1 to Step 5 and described.

Step 1 indicated as "initial learning" is learning of the initial AI model 51. For example, the learning of the initial AI model 51 is performed by an operator cloud in country B using learning data sets stored in a database (DB) #0 in country A. At this time, there occurs a border crossing between countries (country A → country B) regarding image data to be used for learning.

For Step 1, it is conceivable that an AI vendor in country C instructs the operator cloud to execute the learning of the initial AI model 51.

Step 2 indicated as "subsequent learning" is a step for preparing a plurality of customized subsequent networks. In the operator cloud in the country B, the plurality of subsequent networks respectively for applications are prepared by performing machine learning (subsequent learning #1, #2, #3, and so on) using different learning data sets as relearning of a subsequent network by using a preceding network and the subsequent network (provisional version) of the initial AI model 51 obtained in Step 1. For the subsequent learning, for example, learning using a learning data set for country D stored in a database #1 in the country D as learning for the country D, learning using a learning data set for country E stored in a database #2 in the country E as learning for the country E, learning using a learning data set for country F stored in a database #2 in the country F as learning for the country F, and the like are executed (at this time, there occurs a border crossing of image data: countries D to F→ country B).

In Step 2, it is conceivable that the AI vendor in the country C, for example, issues an execution instruction for the subsequent learning.

Note that it is also conceivable that the subsequent learning of Step 2 is executed not in the country B but in an operator cloud in country G (that is, executed in a country different from that in Step 1).

Step 3 indicated as "IRM generation" is a step in which an edge (the camera 3 in this example) in country I (an AI use site) generates the intermediate feature map IRM based on a captured image. Although the preceding network is required to generate the intermediate feature map IRM, the preceding network is transmitted in advance from the operator cloud in the country B to the image sensor 30 in the edge to perform the generation of the intermediate feature map IRM based on the captured image in the image sensor 30 (the AI processing unit 44) in the present example. The generated intermediate feature map IRM is transmitted from a CPU (the control unit 33) to a fog server (the fog server 4), then transmitted from the fog server to a customer cloud in the country I, and transmitted from the customer cloud to the operator cloud.

At this time, there occurs no border crossing of image data (since the intermediate feature map IRM that has been sanitized is used).

In Step 3, it is conceivable that an AI user in the country I, for example, issues an execution instruction for the generation of intermediate feature map IRM.

Note that it is also conceivable that AI processing is performed by the CPU and the fog server in the edge as described later. In this case, the preceding network for the generation of the intermediate feature map IRM is transmitted to the CPU and the fog server.

In addition, a case where the customer cloud exists in country J different from the country I as the AI use site is also conceivable.

Step 4 indicated as "subsequent selection" means selection of a subsequent network based on the intermediate feature map IRM. The operator cloud in the country B (or the country G or country H) selects a corresponding subsequent network from among the plurality of subsequent networks prepared in Step 2 based on the intermediate feature map IRM transmitted from the edge side in Step 3.

At this time, it is conceivable that the AI user in the country I issues an execution instruction for selection of a subsequent network with respect to the operator cloud.

In the main operation of Step 5, the operator cloud deploys a combined network (that is, the overall AI model) obtained by combining the selected subsequent network and the preceding network to the edge (either the image sensor 30 or the CPU and the fog server), and performs inference processing using the AI model in the edge.

At this time, it is conceivable that the AI user in the country I issues an execution instruction for the deployment to the operator cloud and an instruction to start the inference processing to the edge.

Here, it is assumed that the learning using the image data as the input data for learning is performed in the "subsequent learning" in Step 2 in the above description. However, as illustrated in an operation example of Fig. 22, it is also conceivable to perform the "subsequent learning" in Step 2 using the intermediate feature map IRM as the input data for learning instead of the image data.

In this case, the preceding network of the initial AI model 51 obtained in Step 1 is distributed in advance to a learning data collection site in the countries D, E, and F, and the intermediate feature maps IRM as the input data for learning are generated in the countries, respectively. Then, in the "subsequent learning" in Step 2 in this case, relearning of the subsequent network (provisional version) of the initial AI model 51 is executed using learning data sets including the intermediate feature maps IRM obtained in these countries, respectively, to generate a plurality of customized subsequent networks.

### <7. Modification of AI customization >

In the above description, the example in which customization of a subsequent network is performed for the initial AI model 51 has been described. However, it is also conceivable to generate a plurality of customized overall AI models by relearning the overall AI model as the initial AI model 51, and further to perform relearning of a subsequent network for each of the customized overall AI models.

Fig. 23 illustrates a specific example.

Fig. 23A illustrates generation of the initial AI model 51. Here, an example is given in which an AI model capable of absorbing characteristic variations in the image sensor 30 in the camera 3 is created as the initial AI model 51. Specifically, it is conceivable to use pieces of image data reflecting the characteristic variations in the image sensor 30 as pieces of image data in a learning data set in the generation of the initial AI model 51 in this case. Specifically, for example, it is conceivable to prepare a set in which pieces of image data captured by a plurality of the image sensors 30 are mixed as the set of pieces of image data. As a result, it is possible to prevent inference accuracy from varying due to the characteristic variations in the image sensor 30.

Note that a data set having variations other than the sensor characteristics of the image sensor 30 may be used as the learning data set for absorbing variations in the inference accuracy. For example, it is conceivable to use a data set having variations in relation to camera installation conditions and environmental conditions.

In this modification, relearning using a learning data set for overall customization is performed on the initial AI model 51 generated as described above as illustrated in Fig. 23B. Specifically, relearning is performed using different learning data sets for customization (two types of data sets #A and #B in the figure) to generate customized overall models as the overall AI models customized for different applications. The figure illustrates an example in which a customized overall model 51-1 is generated by relearning using the learning data set #A and a customized overall model 51-2 is generated by relearning using the learning data set #B.

Furthermore, in the modification, relearning using a learning data set for customization is performed on a subsequent network for each of the generated customized overall models, thereby generating a plurality of subsequent networks (Fig. 23C). The figure illustrates an example in which learning data sets #a, #b, and so on are prepared as learning data sets for customization with respect to a subsequent network of the customized overall model 51-1, learning data sets #α, #β, and so on are prepared as learning data sets for customization with respect to a subsequent network of the customized overall model 51-2, and relearning of a subsequent network is performed using these learning data sets, thereby generating customized subsequent networks #a, #b, and so on for the subsequent network of the customized overall model 51-1 and generating customized subsequent networks #α, #β, and so on for the subsequent network of the customized overall model 51-2.

In the modification, it is conceivable to perform relearning for customization for each application, for example, an indoor monitoring application and an outdoor monitoring application regarding the relearning of the overall AI model described in Fig. 23B, and it is conceivable to perform relearning for customization for each country or area (difference in race of a person who is a subject or the like) regarding the relearning of the subsequent networks described in Fig. 23C.

Here, in the modification, it is also conceivable to further perform relearning of the subsequent networks obtained by the relearning described in Fig. 23C. In this case, it is also conceivable to make the division position Dv between a preceding network and a subsequent network in the relearning in the second stage different from that in the relearning in the first stage.

For example, in a case where the overall AI model (customized overall model) has a network structure of [A][B][C], it is conceivable to set the division position Dv at the time of subsequent relearning in the first stage as [A]/[B] [C], and sets the division position Dv at the time of subsequent relearning in the second stage as [A][B]/[C] on the later side. As a result, a time required for the subsequent relearning in the second stage and the amount of communication data can be reduced as compared with the subsequent relearning in the first stage.

Note that, as an example of the stepwise subsequent network relearning as described above, for example, it is conceivable to perform customization for each broad area such as the United States, Europe, and Japan in the first stage, and to perform customization in units of smaller divisions such as units of states for the United States in the second stage.

### <8. Modifications>

Although the embodiments according to the present technology have been described as above, the embodiments are not limited to the specific examples described above, and configurations as various modifications may be employed.

For example, the example in which the sensor internal control unit 43 executes the processing as the transmission processing unit F31 and the reception processing unit F32 in response to a case where the inference processing using the subsequent network is performed inside the image sensor 30 has been described in the above description. However, a configuration in which the inference processing using the subsequent network is performed by a processor (a processor outside the image sensor 30 in the camera 3) as the control unit 33 is also conceivable, and in this case, the processing as the transmission processing unit F31 and the reception processing unit F32 is performed by the processor as the control unit 33.

Alternatively, a configuration in which the inference processing using the subsequent network is performed by a processor of the fog server 4 is also conceivable, and in this case, the processing as the transmission processing unit F31 and the reception processing unit F32 is performed by the processor of the fog server 4.

In addition, the example in which the input data of the AI model is the RGB image has been described in the above description. However, a wide range of captured images obtained by imaging sensors can be used as the input data of the AI model. Here, "imaging (capturing)" in the present specification broadly means obtaining image data capturing a subject. The image data referred to here is a generic term for data including a plurality of pieces of pixel data, and the pixel data is a concept broadly including not only data indicating the intensity of the amount of light received from the subject but also, for example, a distance to the subject, polarization information, temperature information, and the like. That is, the "captured images" obtained by the "imaging sensors" include data as a gradation image indicating information regarding the intensity of the amount of received light for each pixel, data as a distance image indicating information regarding the distance to the subject for each pixel, data as a polarized image indicating the polarization information of incident light for each pixel, data as a thermal image indicating the temperature information for each pixel, and the like.

In addition, the input data of the AI model is not limited to the captured images obtained by the imaging sensors, and for example, it is also conceivable to use data other than the captured images, such as sound data collected by a microphone.

The present technology is suitable in a case where data having information content with which personal Identification is possible is used as the input data of the AI model.

In addition, it is assumed that the configuration of the preceding network is unchanged in the above description, but the preceding network may be selected from among a plurality of candidates.

For example, a case where the configuration of the preceding network needs to be changed according to a type (for example, for each of an RGB sensor, an infrared (IR) sensor, and the like) of the imaging sensor is conceivable, and a case where the configuration of the preceding network needs to be changed according to a race type or the like appearing in an image is conceivable. Therefore, inference performance can be improved by selecting a preceding network suitable for these conditions.

Note that machine learning for generating the initial AI model 51 and machine learning for generating a plurality of candidate subsequent networks may be performed in the same country or may be performed in different countries. In addition, it is also conceivable that the machine learning for generating a plurality of candidate subsequent networks is shared and performed by different countries.

In addition, as illustrated in Fig. 24, it is also conceivable to use estimation information IS obtained as an output of a preceding network for imaging control. Here, the estimation information IS means estimation information regarding a subject obtained as a result of AI processing by an AI model as the preceding network based on an input image, and examples thereof can include estimation information regarding imaging scenes such as indoor imaging/outdoor imaging, imaging under clear weather/imaging under rainy weather, and the like, and estimation information regarding a range in which a target subject is present, such as a region of interest (ROI).

Such estimation information IS obtained by the preceding network is provided to the imaging control unit 65 in the camera 3 to perform control regarding predetermined imaging settings, for example, imaging settings related to brightness such as a shutter speed, an aperture value, and ISO sensitivity, and imaging settings of focus, white balance, and noise reduction intensity.

Note that the intermediate feature map IRM output from the preceding network as InputTensor of a subsequent network may be used as the estimation information IS. For example, it is also conceivable to use only the intermediate feature map IRM as the estimation information IS, or to feed back the intermediate feature map IRM and other estimation information as the estimation information IS to the control of imaging settings.

### <9. Summary of embodiments>

As described above, a first information processing device (the server device 1) as an embodiment includes: a subsequent network acquisition processing unit (F11) that receives, from an external device, an intermediate feature map obtained in a predetermined intermediate layer of an artificial intelligence model when input data is given to the artificial intelligence model, which has a neural network and receives detection data from a sensor device (the image sensor 30) as the input data, and selects one of subsequent networks from among a plurality of candidate subsequent networks based on the intermediate feature map, the subsequent networks being networks subsequent to the predetermined intermediate layer in the artificial intelligence model, or generates one of the subsequent networks based on a trained network serving as a base and the intermediate feature map; and a transmission processing unit (F12) that performs processing of transmitting configuration data of the subsequent network selected or generated by the subsequent network acquisition unit to the outside.

According to the above configuration, when the artificial intelligence model on an edge side is adapted to a use environmental condition of the sensor device, it is sufficient to create selection candidates only for the subsequent network instead of the entire network of the artificial intelligence model. Alternatively, it is sufficient to generate the corresponding subsequent network from the trained network serving as the base by, for example, distillation or the like. At this time, the number of times of learning required to generate the candidate subsequent networks can be made smaller than the number of times of learning required for relearning of the entire network including a preceding network. In addition, the number of times of learning required to generate the corresponding subsequent network from the trained network serving as the base can also be made smaller than the number of times of learning required for relearning of the entire network. Since the required number of times of learning can be reduced, a time required to generate a subsequent network suitable for the use environmental condition of the sensor device can be shortened. In addition, since the required number of times of learning can be reduced, the number of pieces of input data for learning required to generate the subsequent network suitable for the use environmental condition of the sensor device can be reduced.

In addition, according to the above configuration, it is sufficient to acquire the intermediate feature map from the edge side in order to acquire one subsequent network suitable for the use environmental condition of the sensor device. Since the intermediate feature map is data obtained by processing the input data in the intermediate layer, it is difficult to identify personal information as it is.

As described above, according to the first information processing device of the embodiment, a time required for adapting the artificial intelligence model on the edge side to the use environmental condition of the sensor device can be shortened, and a data amount of the input data for learning to be transmitted to a cloud side by a user of the artificial intelligence model for the adaptation of the artificial intelligence model can be reduced, and thus, the amount of communication data required for the adaptation of the artificial intelligence model can be reduced.

Furthermore, the intermediate feature map is data that is difficult to identify personal information as it is as described above, and thus, it is possible to reduce a possibility of leakage of personal information in adapting the artificial intelligence model on the edge side to the use environmental condition of the sensor device.

In addition, in adapting the artificial intelligence model on the edge side to the use environmental condition of the sensor device, it is sufficient to transmit only the configuration data of the subsequent network to the edge side, and it is not necessary to transmit configuration data of a preceding network. Also in this respect, the amount of communication data required for the adaptation of the artificial intelligence model on the edge side to the use environmental condition of the sensor device can be reduced.

In addition, in the first information processing device as the embodiment, the intermediate feature map is output data of a second or subsequent intermediate layer in the artificial intelligence model.

It can be said that data with which it is more difficult to identify personal information as compared with output data of the first intermediate layer is obtained as the output data in the second or subsequent intermediate layer.

Therefore, the effect of reducing the possibility of leakage of personal information can be enhanced.

Furthermore, in the first information processing device as the embodiment, the sensor device is an imaging sensor, and the artificial intelligence model is an artificial intelligence model for performing image recognition processing using a captured image obtained by the imaging sensor as input data.

According to the above configuration, regarding the artificial intelligence model that performs the image recognition processing using the captured image as the input data, it is possible to shorten the time required for the adaptation to the use environmental condition of the sensor device, reduce the amount of communication data, and reduce the possibility of leakage of personal information.

In addition, in the first information processing device as the embodiment, the intermediate feature map is data in which the number of pixels of an image area related to personal information when visualized is less than 144 pixels.

That is, the output data is output data of an intermediate layer in which dimensional compression is performed to such an extent that the number of pixels of the image area related to the personal information is less than 144 pixels, such as an image area of a face in a case where a target subject is a person.

As a result, the effect of reducing the possibility of leakage of personal information can be enhanced.

In addition, in the first information processing device as the embodiment, the intermediate feature map is data in which the number of pixels of an image area related to personal information when visualized is less than 64 pixels.

That is, it is output data of an intermediate layer in which dimensional compression is performed to such an extent that the number of pixels of the image area related to the personal information is less than 64 pixels.

As a result, the effect of reducing the possibility of leakage of personal information can be further enhanced.

Furthermore, in the first information processing device as the embodiment, the intermediate feature map is data that cannot be decoded by a decoding unit of an auto-encoder obtained by self-encoding learning of the artificial intelligence model (see Fig. 15 and the like).

As a result, even if a malicious third party has obtained the auto-encoder, it is possible to make it impossible to identify the personal information from the intermediate feature map using the decoding unit of the auto-encoder.

Therefore, the effect of reducing the possibility of leakage of personal information can be enhanced.

In addition, in the first information processing device as the embodiment, the subsequent network acquisition unit selects one of the subsequent networks from among the plurality of candidate subsequent networks based on the intermediate feature map (see Fig. 10, Fig. 16, or the like).

As a result, in adapting the artificial intelligence model on the edge side to the use environmental condition of the sensor device, it is sufficient to create selection candidates only for the subsequent network instead of the entire network of the artificial intelligence model, and it is possible to reduce the required number of times of learning as compared with the case of performing relearning of the entire network including the preceding network.

Therefore, the time required for adapting the artificial intelligence model on the edge side to the use environmental condition of the sensor device can be shortened, and the data amount of the input data for learning to be transmitted to the cloud side by the user of the artificial intelligence model for the adaptation of the artificial intelligence model can be reduced, and thus, the amount of communication data required for the adaptation of the artificial intelligence model can be reduced.

In addition, in the first information processing device as the embodiment, the plurality of candidate subsequent networks are generated by machine learning as active learning (see Fig. 17 and the like).

This makes it possible to generate a small network as each candidate subsequent network. Therefore, it is suitable in a case where a device that performs inference processing using the subsequent network is a device having insufficient hardware resources.

Furthermore, in the first information processing device as the embodiment, the subsequent network acquisition unit generates one of the subsequent networks based on the trained network serving as the base and the intermediate feature map (see Figs. 18 to 20 and the like).

As a result, in adapting the artificial intelligence model on the edge side to the use environmental condition of the sensor device, it is sufficient to generate the corresponding subsequent network from the trained network serving as the base, and it is possible to reduce the required number of times of learning as compared with the case of performing relearning of the entire network including the preceding network.

Therefore, the time required for adapting the artificial intelligence model on the edge side to the use environmental condition of the sensor device can be shortened, and the data amount of the input data for learning to be transmitted to the cloud side by the user of the artificial intelligence model for the adaptation of the artificial intelligence model can be reduced, and thus, the amount of communication data required for the adaptation of the artificial intelligence model can be reduced.

In addition, in the first information processing device as the embodiment, the subsequent network acquisition unit generates one of the subsequent networks by performing knowledge distillation using the trained network serving as the base as a teacher model based on the intermediate feature map.

According to the above configuration, knowledge distillation based on the intermediate feature map input from the external device is performed as the knowledge distillation using the trained network serving as the base as the teacher model.

Since such knowledge distillation is performed, it is possible to generate the small subsequent network suitable for the use environmental condition of the sensor device, which is suitable in the case where the device that performs the inference processing using the subsequent network is the device having insufficient hardware resources.

A first information processing method as an embodiment is an information processing method that causes an information processing device to perform: subsequent network acquisition processing of receiving, from an external device, an intermediate feature map obtained in a predetermined intermediate layer of an artificial intelligence model when input data is given to the artificial intelligence model, which has a neural network and receives detection data from a sensor device as the input data, and selecting one of subsequent networks from among a plurality of candidate subsequent networks based on the intermediate feature map, the subsequent networks being networks subsequent to the predetermined intermediate layer in the artificial intelligence model, or generating one of the subsequent networks based on a trained network serving as a base and the intermediate feature map; and transmission processing of transmitting configuration data of the subsequent network selected or generated in the subsequent network acquisition to the outside.

With the first information processing method as well, it is possible to obtain the same operations and effects as those of the first information processing device as the embodiment described above.

A second information processing device (the image sensor 30) as an embodiment includes: a transmission processing unit (F31) that performs processing of transmitting, to the outside, an intermediate feature map obtained in a predetermined intermediate layer of an artificial intelligence model when input data is given to the artificial intelligence model, which has a neural network and receives detection data from a sensor device as the input data; a reception processing unit (F32) that performs processing of receiving configuration data of any subsequent network that is either one of subsequent networks selected by an external device from among a plurality of candidate subsequent networks based on the intermediate feature map transmitted by the transmission processing unit, the subsequent networks being networks subsequent to the predetermined intermediate layer in the artificial intelligence model, or one of the subsequent networks generated by the external device based on a trained network serving as a base and the intermediate feature map transmitted by the transmission processing unit; and an inference processing unit (the AI processing unit 44) that performs inference processing using the subsequent network achieved by the configuration data received by the reception processing unit.

According to the above configuration, as an edge-side information processing device that performs inference processing based on the detection data of the sensor device, there is provided the information processing device capable of adopting any one of a method of selecting one of the subsequent networks from among the plurality of candidate subsequent networks based on the intermediate feature map and a method of generating one of the subsequent networks based on the trained network serving as the base and the intermediate feature map as a method of obtaining the subsequent network suitable for a use environmental condition of the sensor device by the external device.

Therefore, similarly to the first information processing device described above, the second information processing device of the embodiment can also shorten a time required for adapting the artificial intelligence model on the edge side to the use environmental condition of the sensor device and reduce a data amount of input data for learning to be transmitted to a cloud side by a user of the artificial intelligence model for the adaptation of the artificial intelligence model, thereby reducing the amount of communication data required for the adaptation of the artificial intelligence model.

Furthermore, since the intermediate feature map is used, it is possible to reduce a possibility of leakage of personal information in adapting the artificial intelligence model on the edge side to the use environmental condition of the sensor device.

In addition, in the second information processing device as the embodiment, the intermediate feature map is output data of a second or subsequent intermediate layer in the artificial intelligence model.

It can be said that data with which it is more difficult to identify personal information as compared with output data of the first intermediate layer tends to be obtained as the output data in the second or subsequent intermediate layer.

Therefore, the effect of reducing the possibility of leakage of personal information can be enhanced.

Furthermore, in the second information processing device as the embodiment, the sensor device is an imaging sensor, and the artificial intelligence model is an artificial intelligence model for performing image recognition processing using a captured image obtained by the imaging sensor as input data.

According to the above configuration, regarding the artificial intelligence model that performs the image recognition processing using the captured image as the input data, it is possible to shorten the time required for the adaptation to the use environmental condition of the sensor device, reduce the amount of communication data, and reduce the possibility of leakage of personal information.

In addition, in the second information processing device as the embodiment, the intermediate feature map is data in which the number of pixels of an image area related to personal information when visualized is less than 144 pixels.

That is, the output data is output data of an intermediate layer in which dimensional compression is performed to such an extent that the number of pixels of the image area related to the personal information is less than 144 pixels, such as an image area of a face in a case where a target subject is a person.

As a result, the effect of reducing the possibility of leakage of personal information can be enhanced.

In addition, in the second information processing device as the embodiment, the intermediate feature map is data in which the number of pixels of an image area related to personal information when visualized is less than 64 pixels.

That is, it is output data of an intermediate layer in which dimensional compression is performed to such an extent that the number of pixels of the image area related to the personal information is less than 64 pixels.

As a result, the effect of reducing the possibility of leakage of personal information can be further enhanced.

Furthermore, in the second information processing device as the embodiment, the intermediate feature map is data that cannot be decoded by a decoding unit of an auto-encoder obtained by self-encoding learning of the artificial intelligence model.

As a result, even if a malicious third party has obtained the auto-encoder, it is possible to make it impossible to identify the personal information from the intermediate feature map using the decoding unit of the auto-encoder.

Therefore, the effect of reducing the possibility of leakage of personal information can be enhanced.

A second information processing method as an embodiment is an information processing method that causes an information processing device to perform: transmission processing of transmitting, to the outside, an intermediate feature map obtained in a predetermined intermediate layer of an artificial intelligence model when input data is given to the artificial intelligence model, which has a neural network and receives detection data from a sensor device as the input data; reception processing of receiving configuration data of any subsequent network that is either one of subsequent networks selected by an external device from among a plurality of candidate subsequent networks based on the intermediate feature map transmitted in the transmission processing, the subsequent networks being networks subsequent to the predetermined intermediate layer in the artificial intelligence model, or one of the subsequent networks generated by the external device based on a trained network serving as a base and the intermediate feature map transmitted in the transmission processing; and inference processing of performing inference processing using the subsequent network achieved by the configuration data received in the reception processing.

With the second information processing method as well, it is possible to obtain the same operations and effects as those of the second information processing device as the embodiment described above.

An information processing system (100) as an embodiment includes: a first transmission processing unit (the transmission processing unit F31) that performs processing of transmitting, to the outside, an intermediate feature map obtained in a predetermined intermediate layer of an artificial intelligence model when input data is given to the artificial intelligence model which has a neural network and receives detection data from a sensor device as the input data; a subsequent network acquisition unit (F11) that is provided in an external device outside a device including the first transmission processing unit, and selects one of subsequent networks from among a plurality of candidate subsequent networks based on the intermediate feature map transmitted by the first transmission processing unit, the subsequent networks being networks subsequent to the predetermined intermediate layer in the artificial intelligence model, or generates one of the subsequent networks based on a trained network serving as a base and the intermediate feature map transmitted by the first transmission processing unit; a second transmission processing unit (the transmission processing unit F12) that is provided in the external device outside the device including the first transmission processing unit and performs processing of transmitting configuration data of the subsequent network selected or generated by the subsequent network acquisition unit to the outside; a reception processing unit (F32) that is provided in the device including the first transmission processing unit and performs processing of receiving the configuration data; and an inference processing unit (the AI processing unit 44) that is provided in the device including the first transmission processing unit and performs inference processing using the subsequent network achieved by the configuration data received by the reception processing unit.

With the information processing system as well, it is possible to obtain the same operations and effects as those of the first and second information processing devices as the embodiments described above.

Note that the effects described in the present specification are merely examples and are not limited, and other effects may be provided.

### <10. Present technique>

The present technology can also adopt the following configurations.
(1) An information processing device including:
   a subsequent network acquisition unit that receives, from an external device, an intermediate feature map obtained in a predetermined intermediate layer of an artificial intelligence model when input data is given to the artificial intelligence model, which has a neural network and receives detection data from a sensor device as the input data, and selects one of subsequent networks from among a plurality of candidate subsequent networks based on the intermediate feature map, the subsequent networks being networks subsequent to the predetermined intermediate layer in the artificial intelligence model, or generates one of the subsequent networks based on a trained network serving as a base and the intermediate feature map; and
   a transmission processing unit that performs processing of transmitting configuration data of the subsequent network selected or generated by the subsequent network acquisition unit to an outside.
(2) The information processing device according to (1), wherein the intermediate feature map is output data of a second or subsequent intermediate layer in the artificial intelligence model.
(3) The information processing device according to (1) or (2), wherein the sensor device is an imaging sensor, and the artificial intelligence model is an artificial intelligence model for performing image recognition processing using a captured image obtained by the imaging sensor as input data.
(4) The information processing device according to (3), wherein the intermediate feature map is data in which the number of pixels of an image area related to personal information when visualized is less than 144 pixels.
(5) The information processing device according to (3), wherein the intermediate feature map is data in which the number of pixels of an image area related to personal information when visualized is less than 64 pixels.
(6) The information processing device according to any one of (1) to (5), wherein the intermediate feature map is data that is not decodable by a decoding unit of an auto-encoder obtained by self-encoding learning of the artificial intelligence model.
(7) The information processing device according to any one of (1) to (6), wherein the subsequent network acquisition unit selects one of the subsequent networks from among the plurality of candidate subsequent networks based on the intermediate feature map.
(8) The information processing device according to (7), wherein the plurality of candidate subsequent networks are generated by machine learning as active learning.
(9) The information processing device according to any one of (1) to (6), wherein the subsequent network acquisition unit generates one of the subsequent networks based on the trained network serving as the base and the intermediate feature map.
(10) The information processing device according to (9), wherein the subsequent network acquisition unit generates one of the subsequent networks by performing knowledge distillation using the trained network serving as the base as a teacher model based on the intermediate feature map.
(11) An information processing method that causes an information processing device to perform: subsequent network acquisition processing of receiving, from an external device, an intermediate feature map obtained in a predetermined intermediate layer of an artificial intelligence model when input data is given to the artificial intelligence model, which has a neural network and receives detection data from a sensor device as the input data, and selecting one of subsequent networks from among a plurality of candidate subsequent networks based on the intermediate feature map, the subsequent networks being networks subsequent to the predetermined intermediate layer in the artificial intelligence model, or generating one of the subsequent networks based on a trained network serving as a base and the intermediate feature map; and
   transmission processing of transmitting configuration data of the subsequent network selected or generated in the subsequent network acquisition processing to an outside.
(12) An information processing device including:
   a transmission processing unit that performs processing of transmitting, to an outside, an intermediate feature map obtained in a predetermined intermediate layer of an artificial intelligence model when input data is given to the artificial intelligence model which has a neural network and receives detection data from a sensor device as the input data;
   a reception processing unit that performs processing of receiving configuration data of any subsequent network that is either one of subsequent networks selected by an external device from among a plurality of candidate subsequent networks based on the intermediate feature map transmitted by the transmission processing unit, the subsequent networks being networks subsequent to the predetermined intermediate layer in the artificial intelligence model, or one of the subsequent networks generated by the external device based on a trained network serving as a base and the intermediate feature map transmitted by the transmission processing unit; and
   an inference processing unit that performs inference processing using the subsequent network achieved by the configuration data received by the reception processing unit.
(13) The information processing device according to (12), wherein the intermediate feature map is output data of a second or subsequent intermediate layer in the artificial intelligence model.
(14) The information processing device according to (12) or (13), wherein the sensor device is an imaging sensor, and the artificial intelligence model is an artificial intelligence model for performing image recognition processing using a captured image obtained by the imaging sensor as input data.
(15) The information processing device according to (14), wherein the intermediate feature map is data in which the number of pixels of an image area related to personal information when visualized is less than 144 pixels.
(16) The information processing device according to (14), wherein the intermediate feature map is data in which the number of pixels of an image area related to personal information when visualized is less than 64 pixels.
(17) The information processing device according to any one of (12) to (16), wherein the intermediate feature map is data that is not decodable by a decoding unit of an auto-encoder obtained by self-encoding learning of the artificial intelligence model.
(18) An information processing method that causes an information processing device to perform: transmission processing of transmitting, to an outside, an intermediate feature map obtained in a predetermined intermediate layer of an artificial intelligence model when input data is given to the artificial intelligence model which has a neural network and receives detection data from a sensor device as the input data;
   reception processing of receiving configuration data of any subsequent network that is either one of subsequent networks selected by an external device from among a plurality of candidate subsequent networks based on the intermediate feature map transmitted in the transmission processing, the subsequent networks being networks subsequent to the predetermined intermediate layer in the artificial intelligence model, or one of the subsequent networks generated by the external device based on a trained network serving as a base and the intermediate feature map transmitted in the transmission processing; and
   inference processing of performing inference processing using the subsequent network achieved by the configuration data received in the reception processing.
(19) An information processing system including:
   a first transmission processing unit that performs processing of transmitting, to an outside, an intermediate feature map obtained in a predetermined intermediate layer of an artificial intelligence model when input data is given to the artificial intelligence model which has a neural network and receives detection data from a sensor device as the input data;
   a subsequent network acquisition unit that is provided in an external device outside a device including the first transmission processing unit, and selects one of subsequent networks from among a plurality of candidate subsequent networks based on the intermediate feature map transmitted by the first transmission processing unit, the subsequent networks being networks subsequent to the predetermined intermediate layer in the artificial intelligence model, or generates one of the subsequent networks based on a trained network serving as a base and the intermediate feature map transmitted by the first transmission processing unit;
   a second transmission processing unit that is provided in the external device outside the device including the first transmission processing unit and performs processing of
   transmitting configuration data of the subsequent network selected or generated by the subsequent network acquisition unit to an outside;
   a reception processing unit that is provided in the device including the first transmission processing unit and performs processing of receiving the configuration data; and an inference processing unit that is provided in the device including the first transmission processing unit and performs inference processing using the subsequent network achieved by the configuration data received by the reception processing unit.

### [Reference Signs List]

- 100: Information processing system
- 1: Server device
- 3: Camera
- 4: Fog server
- 5: Network
- 11: CPU
- 30: Image sensor
- 33: Control unit
- 35: Communication unit
- 37: Bus
- 41: Imaging unit
- 43: Sensor internal control unit
- 44: AI processing unit
- 47: Communication interface
- 48: Bus
- D1, D2: Die
- 50: AI model
- 50n: DNN network
- 51: Initial AI model
- 55: Post-processing unit
- 60: Auto-encoder
- 60a: Decoding unit
- Dv: Division position
- F11: subsequent network acquisition unit
- F12: Transmission processing unit
- F31: Transmission processing unit
- F32: Reception processing unit

## Claims

1. An information processing device comprising:
a subsequent network acquisition unit that receives, from an external device, an intermediate feature map obtained in a predetermined intermediate layer of an artificial intelligence model when input data is given to the artificial intelligence model, which has a neural network and receives detection data from a sensor device as the input data, and selects one of subsequent networks from among a plurality of candidate subsequent networks based on the intermediate feature map, the subsequent networks being networks subsequent to the predetermined intermediate layer in the artificial intelligence model, or generates one of the subsequent networks based on a trained network serving as a base and the intermediate feature map; and
a transmission processing unit that performs processing of transmitting configuration data of the subsequent network selected or generated by the subsequent network acquisition unit to an outside.

2. The information processing device according to claim 1, wherein the intermediate feature map is output data of a second or subsequent intermediate layer in the artificial intelligence model.

3. The information processing device according to claim 1, wherein the sensor device is an imaging sensor, and the artificial intelligence model is an artificial intelligence model for performing image recognition processing using a captured image obtained by the imaging sensor as input data.

4. The information processing device according to claim 3, wherein the intermediate feature map is data in which a number of pixels of an image area related to personal information when visualized is less than 144 pixels.

5. The information processing device according to claim 3, wherein the intermediate feature map is data in which a number of pixels of an image area related to personal information when visualized is less than 64 pixels.

6. The information processing device according to claim 1, wherein the intermediate feature map is data that is not decodable by a decoding unit of an auto-encoder obtained by self-encoding learning of the artificial intelligence model.

7. The information processing device according to claim 1, wherein the subsequent network acquisition unit selects one of the subsequent networks from among the plurality of candidate subsequent networks based on the intermediate feature map.

8. The information processing device according to claim 7, wherein the plurality of candidate subsequent networks are generated by machine learning as active learning.

9. The information processing device according to claim 1, wherein the subsequent network acquisition unit generates one of the subsequent networks based on the trained network serving as the base and the intermediate feature map.

10. The information processing device according to claim 9, wherein the subsequent network acquisition unit generates one of the subsequent networks by performing knowledge distillation using the trained network serving as the base as a teacher model based on the intermediate feature map.

11. An information processing method that causes an information processing device to perform: subsequent network acquisition processing of receiving, from an external device, an intermediate feature map obtained in a predetermined intermediate layer of an artificial intelligence model when input data is given to the artificial intelligence model, which has a neural network and receives detection data from a sensor device as the input data, and selecting one of subsequent networks from among a plurality of candidate subsequent networks based on the intermediate feature map, the subsequent networks being networks subsequent to the predetermined intermediate layer in the artificial intelligence model, or generating one of the subsequent networks based on a trained network serving as a base and the intermediate feature map; and
transmission processing of transmitting configuration data of the subsequent network selected or generated in the subsequent network acquisition processing to an outside.

12. An information processing device comprising:
a transmission processing unit that performs processing of transmitting, to an outside, an intermediate feature map obtained in a predetermined intermediate layer of an artificial intelligence model when input data is given to the artificial intelligence model which has a neural network and receives detection data from a sensor device as the input data;
a reception processing unit that performs processing of receiving configuration data of any subsequent network that is either one of subsequent networks selected by an external device from among a plurality of candidate subsequent networks based on the intermediate feature map transmitted by the transmission processing unit, the subsequent networks being networks subsequent to the predetermined intermediate layer in the artificial intelligence model, or one of the subsequent networks generated by the external device based on a trained network serving as a base and the intermediate feature map transmitted by the transmission processing unit; and
an inference processing unit that performs inference processing using the subsequent network achieved by the configuration data received by the reception processing unit.

13. The information processing device according to claim 12, wherein the intermediate feature map is output data of a second or subsequent intermediate layer in the artificial intelligence model.

14. The information processing device according to claim 12, wherein the sensor device is an imaging sensor, and the artificial intelligence model is an artificial intelligence model for performing image recognition processing using a captured image obtained by the imaging sensor as input data.

15. The information processing device according to claim 14, wherein the intermediate feature map is data in which a number of pixels of an image area related to personal information when visualized is less than 144 pixels.

16. The information processing device according to claim 14, wherein the intermediate feature map is data in which a number of pixels of an image area related to personal information when visualized is less than 64 pixels.

17. The information processing device according to claim 12, wherein the intermediate feature map is data that is not decodable by a decoding unit of an auto-encoder obtained by self-encoding learning of the artificial intelligence model.

18. An information processing method that causes an information processing device to perform:
transmission processing of transmitting, to an outside, an intermediate feature map obtained in a predetermined intermediate layer of an artificial intelligence model when input data is given to the artificial intelligence model which has a neural network and receives detection data from a sensor device as the input data;
reception processing of receiving configuration data of any subsequent network that is either one of subsequent networks selected by an external device from among a plurality of candidate subsequent networks based on the intermediate feature map transmitted in the transmission processing, the subsequent networks being networks subsequent to the predetermined intermediate layer in the artificial intelligence model, or one of the subsequent networks generated by the external device based on a trained network serving as a base and the intermediate feature map transmitted in the transmission processing; and
inference processing of performing inference processing using the subsequent network achieved by the configuration data received in the reception processing.

19. An information processing system comprising:
a first transmission processing unit that performs processing of transmitting, to an outside, an intermediate feature map obtained in a predetermined intermediate layer of an artificial intelligence model when input data is given to the artificial intelligence model which has a neural network and receives detection data from a sensor device as the input data;
a subsequent network acquisition unit that is provided in an external device outside a device including the first transmission processing unit, and selects one of subsequent networks from among a plurality of candidate subsequent networks based on the intermediate feature map transmitted by the first transmission processing unit, the subsequent networks being networks subsequent to the predetermined intermediate layer in the artificial intelligence model, or generates one of the subsequent networks based on a trained network serving as a base and the intermediate feature map transmitted by the first transmission processing unit;
a second transmission processing unit that is provided in the external device outside the device including the first transmission processing unit and performs processing of transmitting configuration data of the subsequent network selected or generated by the subsequent network acquisition unit to an outside;
a reception processing unit that is provided in the device including the first transmission processing unit and performs processing of receiving the configuration data; and
an inference processing unit that is provided in the device including the first transmission processing unit and performs inference processing using the subsequent network achieved by the configuration data received by the reception processing unit.
